# EUROPEAN PATENT APPLICATION

(11) **EP 3 128 168 A1**
(43) Date of publication of application: **08.02.2017**
(21) Application number: 15757849.3
(22) Date of filing: 29.01.2015
(51) Int. Cl.: F03B 17/00, F03G 7/00

(54) **BUOYANT KINETIC ENERGY APPARATUS AND KINETIC ENERGY GENERATION METHOD THEREOF**

(30) Priority: 06.03.2014 CN 201410080634
(71) Applicant: Tai, Chun-i, Kaohsiung City (TW)
(72) Inventor: HUANG, Wen-ching, Kaohsiung City (TW); CHEN, Wen-kuan, Kaohsiung City (TW)
(74) Representative: Lang, Christian
(86) International application number: PCT/CN2015/071838
(87) International publication number: WO 2015/131729

(57) **Abstract**

A buoyancy-driven kinetic energy generating apparatus includes a base having a tank. A rotor includes a rotor body rotatably received in the tank. At least one float telescopes relative to the rotor body to a rotating axis of the rotor body while the rotor body rotates. A telescopic movement control module is mounted in the tank and controls the telescopic movement of the at least one float. A method generates kinetic energy by using the buoyancy-driven kinetic energy generating apparatus. The method includes filling a liquid into the tank to provide the rotor body with a pre-buoyancy and controlling the at least one float to telescope relative to the rotor body, causing a change in local buoyancy of the rotor body to imbalance the rotor body and to cause rotation of the rotor body about the rotating axis.

## Description

### BACKGROUND OF THE INVENTION

### 1. Field of the Invention

The present invention relates to an apparatus for generating kinetic energy and, more particularly, to a buoyancy-driven kinetic energy generating apparatus and method for generating kinetic energy by using the buoyancy-driven kinetic energy generating apparatus.

### 2. Description of the Related Art

In the developing history of human civilization, many kinetic energy generating apparatuses capable of generating kinetic energy have been proposed to drive a device or to covert the kinetic energy into electric energy for wider applications, improving the life quality of human. These kinetic energy generating apparatuses are generally of two types: one of them uses natural energy as the power for generating kinetic energy, such as wind power generation, solar power generation, hydro-power generation, etc., and the other consumes natural resources to generate the power for generating kinetic energy, such as nuclear power generation, coal-fired power generation, etc. However, these kinetic energy generating apparatuses still have disadvantages.

Firstly, although the kinetic energy generating apparatuses using natural energy is cheap, abundant, and pollutionless, the occurrences of the natural energy and its intensity can not be controlled such that maintaining a stable energy generating efficiency of the kinetic energy generating apparatuses using natural energy is difficult.

Secondly, although the kinetic energy generating apparatuses consuming natural resources can easily be controlled, the natural resources are not exhaustless. The natural resources will exhaust someday under large-scale mining by the human. Furthermore, operation of the kinetic energy generating apparatuses consuming natural resources not only have safety risks but generates waste (such as nuclear waste) causing severe environmental pollution. Treatment of the waste further incurs tricky and costly problems.

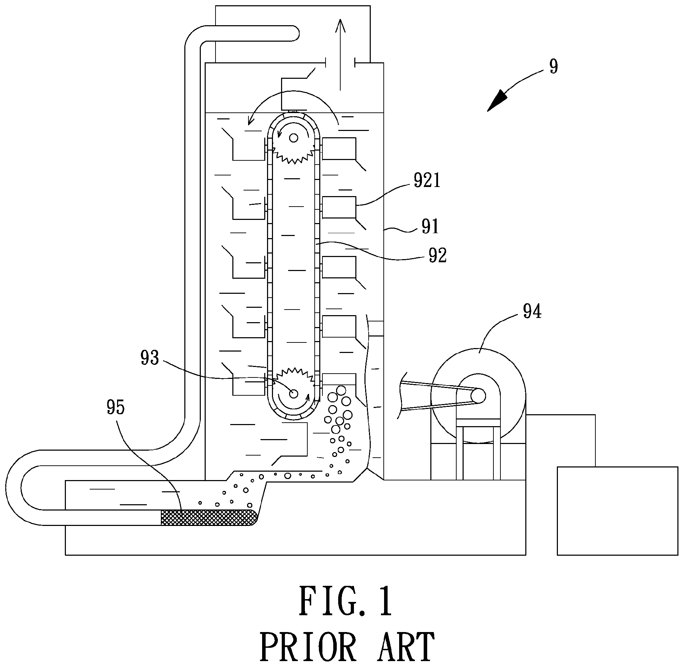

To solve the above problems, a buoyancy-driven kinetic energy generating device utilizing buoyancy has been developed. With reference to FIG. 1, a conventional buoyancy-driven kinetic energy generating device 9 includes a tower 91 receiving a conveyor 92. The conveyor 92 is connected to and drives a rotary shaft 93 to rotate. The rotary shaft 93 is connected to a generator 94 outside of the tower 91. A plurality of buckets 921 is mounted to the conveyor 92. An opening of each bucket 921 faces downward when it is adjacent to a bottom of the tower 91. A bubble supply means 95 fills gas bubbles into the bucket 921 reaching a lower portion of a side of the conveyor 92 to generate buoyancy. When the bucket 921 with bubbles moves upward to a position above the water surface, the gas in the bucket 921 is discharged, and the bucket 921 sinks into the water with the opening of the bucket 921 facing upward to receive water for smooth sinking. An example of such a buoyancy-driven kinetic energy generating device is disclosed in U.S. Patent No. 7,216,483 entitled "POWER GENERATING SYSTEM UTILIZING BUOYANCY".

However, operation of the buoyancy-driven kinetic energy generating device 9 requires additional power to actuate the bubble supply means 95 for generating bubbles and filling the bubbles into the buckets 921 so as to continuously drive the conveyor 92 by buoyancy to thereby drive the generator 94 to generate electric energy. Furthermore, since the buoyancy-driven kinetic energy generating device can only use the buoyancy of less than half of the buckets 921 to drive the conveyor 92 while each bucket 921 has a limited capacity, it is difficult to increase the total buoyancy, resulting in inefficient operation of the conveyor 92.

Furthermore, the buoyancy-driven kinetic energy generating device 9 has many components leading to high costs in manufacture, assembly, and maintenance. During operation, the conveyor 92 and the rotary shaft 93 are connected by a chain and gears moving in the water. These mechanical components have high friction therebetween and, thus, can not move smoothly without sufficient lubrication. Operation in the water causes difficult lubrication and increases the resistance to meshing. All of these increase the resistance during operation of the buoyancy-driven kinetic energy generating device 9. Furthermore, when each bucket 921 is moved above the water surface and is about to sink into water again, a resistance occurs during sinking of the bucket 921. Furthermore, after each bucket 921 is in the water, the residual air in the bucket 921 generates buoyancy while the water is filling the bucket 921, causing further resistance to operation of the conveyor 92. In view of these factors, the buoyancy-driven kinetic energy generating device 9 not only consumes energy but must use a high-resistance mechanical structure with a resistance not larger than the total buoyancy. Thus, the buoyancy-driven kinetic energy generating 9 is in inefficient in generating kinetic energy.

In view of the above reasons, an improvement to the conventional buoyancy-driven kinetic energy generating device is necessary.

Besides, U.S Patent No. 4,363,212 discloses a buoyancy prime mover, U.S Patent No. 4,363,212 discloses a buoyancy prime mover with pressure control means, and U.S Patent No. 6,305,165 discloses methods and apparatus for acquiring free energy using buoyancy technology. Taiwan (province of China) Patent Publication No. 200408766 discloses a buoyancy kinetic energy machine. Taiwan Patent Publication No. 200632212 discloses a hydraulic power generation apparatus using alternating gravity and buoyancy forces. Taiwan Patent Publication No. 200714801 discloses a generator of constant power energy. Taiwan Patent Publication No. 201217638 discloses a buoyancy power generator, and a buoy device and a transmission device of the buoyancy power generator. Taiwan Patent Publication No. 201319385 discloses a simple underwater power generation device. China Patent Publication No. 1508423 discloses a buoyancy kinetic energy machine. China Patent Publication No. 101201040 discloses a circulating gas-bag buoyancy power arrangement, China Patent No. 102112740 discloses a power generation apparatus. China Patent No. 102374108 discloses a buoyancy and gravity circulating electricity generation method. China Patent No. 102852706 discloses a buoyancy power machine. China Patent No. 103291533 discloses a buoyancy engine. China Patent No. 103511174 discloses an earth gravity and liquid buoyancy power generation device. China Patent No. 103511209 discloses a density difference engine. Japan Patent Publication Nos. 56-113066, 2007-132214 and 2013-113293 also disclose similar buoyancy-driven kinetic energy generating devices. The above buoyancy-driven apparatuses also use buoyancy force to generate kinetic power. However, these buoyancy-driven apparatuses have disadvantages such as complex structure and low kinetic energy generation efficiency.

In light of this, it is necessary to improve the conventional buoyancy-driven apparatuses.

### SUMMARY OF THE INVENTION

An objective of the present invention is to provide a buoyancy-driven kinetic energy generating apparatus having increased total buoyancy while having a lower resistance during operation, allowing smooth operation of the buoyancy-driven kinetic energy generating apparatus to enhance the kinetic energy generating efficiency.

Another objective of the present invention is to provide a buoyancy-driven kinetic energy generating apparatus having a simple structure to reduce the costs of manufacture, assembly, and maintenance.

To achieve the above objectives, the invention utilizes the following techniques.

A buoyancy-driven kinetic energy generating apparatus includes a base including a tank, a rotor, at least one float and a telescopic movement control module. The rotor includes a rotor body and a shaft portion. The shaft portion is coupled to the rotor body and the tank. The rotor body is rotatably received in the tank about a rotating axis defined by the shaft portion. The at least one float is telescopically mounted to the rotor body. The telescopic movement control module is mounted in the tank and controls the at least one float to telescope relative to the rotor body while the rotor body rotates.

The tank is adapted to receive a liquid. The rotor body has an interior. The interior of the rotor body is hollow and adapted to receive a mass having a density smaller than a density of the liquid to create buoyancy to float the rotor body on the liquid in the tank. Alternatively, the rotor body has a density smaller than a density of the liquid to create buoyancy to float the rotor body on the liquid in the tank.

The shaft portion of the rotor body may be connected to a speed regulating device.

The at least one float is telescopically mounted to an outer surface of the rotor body. Furthermore, the outer surface of the rotor body includes first and second end faces and a peripheral face connected between the first and second end faces. The first and second end faces oppose to each other. The at least one float telescopically is mounted to the peripheral face of the rotor body and telescopically moving in a radial direction relative to the rotor body.

The base includes two shaft fixing portions. The two shaft fixing portions are respectively mounted to two opposite outer sides of the tank respectively of two lateral walls of the tank and coaxial to each other. The shaft portion of the rotor body includes two shafts. Each of the two shafts includes a shaft hole. Each of the two shafts includes an end mounted to a respective one of the first and second end faces of the rotor body, as well as another end extending through the tank and connected to a respective one of the two shaft fixing portions. The shaft holes of the two shafts intercommunicate an interior of the rotor body with an outside of the tank.

The telescopic movement control module may include a guiding track and at least one slidewheel unit. The at least one slidewheel unit has a same quantity as the at least one float. Each of the at least one slidewheel unit is mounted to the rotor body and connected to a respective one of the at least one float. The guiding track is mounted in the tank and guides the at least one slidewheel unit to move, thereby controlling the telescopic movement of the respective one of the at least one float.

The guiding track includes an abutment face facing the peripheral face of the rotor body.

The guiding track includes a movement control section and a maintaining section arranged in sequence in a rotating direction of the rotor. The movement control section and the maintaining section are connected to each other. A spacing between the movement control section and a rotating center of the rotor decreases from a point of the movement control section toward the maintaining section. The abutment face and the peripheral face of the rotor body are concentric in the maintaining section.

A telescopic movement end line is at an angle of 45° to a horizontal line. The telescopic movement end line passes through a rotating center of the rotor body and the maintaining section of the guiding track. The telescopic movement end line passes through a location at an upper portion of the rotor body. The location defines a maximal level. The horizontal line passes through the rotating center of the rotor body and defines a minimal level. A level of the liquid is between the maximal level and the minimal level.

The at least one float includes a first float. The peripheral face of the rotor body includes a first slot. The first float includes a housing and an isolating member. The housing has an open end and is received in the first slot. The open end faces the interior of the rotor body. The isolating member connects the housing of the first float to the rotor body. The isolating member seals the first slot.

Alternatively, the at least one float may further include a second float opposite to the first float in a diametric direction of the rotor body. The peripheral face of the rotor body further includes a second slot. The second float includes a housing. The housing of the second float has an open end and is received in the second slot. The open end of the housing of the second float faces the interior of the rotor body. The second float further includes an isolating member connecting the housing of the second float to the rotor body. The isolating member of the second float seals the second slot.

A connecting module may be connected between the first and second floats. The connecting module includes two fixing members respectively fixed to inner walls of the housings of the first and second floats. The connecting module further includes a connecting rod having two ends respectively fixed to the two fixing members.

The peripheral face of the rotor body may further include a third slot and a fourth slot. The at least one float further includes a third float and a fourth float opposed to the third float in a diametric direction of the rotor body. Each of the third and fourth floats is located between the first and second floats. The third float includes a housing. The housing of the third float has an open end and is received in the third slot. The open end of the housing of the third float faces the interior of the rotor body. The third float further includes an isolating member connecting the housing of the third float to the rotor body. The isolating member of the third float seals the third slot. The fourth float includes a housing. The housing of the fourth float has an open end and is received in the fourth slot. The open end of the housing of the fourth float faces the interior of the rotor body. The fourth float further includes an isolating member connecting the housing of the fourth float to the rotor body. The isolating member of the fourth float seals the fourth slot.

A connecting module may be connected between the third and fourth floats. The connecting module includes two fixing members respectively fixed to inner walls of the housings of the third and fourth floats. The connecting module further includes a connecting rod having two ends respectively fixed to the two fixing members.

Each of the at least one slidewheel unit may include a first slidewheel unit, a positioning unit and a pivoting unit. The first slidewheel unit is mounted to an outer surface of the housing of the respective one of the at least one float. The positioning unit is connected to the rotor body and includes a second slidewheel unit. The pivoting unit is connected to the rotor body. A connecting rope is wound around the first and second slidewheel units and connected to the pivoting unit. The pivoting unit starts to pivot when making contact with the guiding track. The pivoting unit pulls the connecting rope to control the telescopic movement of the respective one of the at least one float.

The housing may include a liquid breaking portion in a front end of the housing in a rotating direction of the rotor. The liquid breaking portion has an protruding edge. The protruding edge has two side faces meeting each other at a center of the protruding edge and respectively connecting to two lateral edges of the housing.

The rotor may further include a plurality of outer tracks respectively mounted to the first and second end faces of the rotor body. The outer surface of the housing of the float has two sides provided with a plurality of limiting members. Each of the plurality of limiting members is movably mounted in a corresponding one of the plurality of outer tracks. Furthermore, the positioning unit may include a positioning support having two ends respectively fixed to two adjacent ones of the plurality of outer tracks, permitting the positioning support to stretch over the peripheral face of the rotor body. Moreover, the plurality of outer tracks includes a plurality of first outer tracks connected to the first end face of the rotor body, as well as a plurality of second outer tracks connected to the second end face of the rotor body. The plurality of first outer tracks is connected by a ring, and the plurality of second outer tracks is connected by another ring.

The second slidewheel unit is mounted to the positioning support and may be diametrically opposed to the first slidewheel unit.

The positioning unit may further include a third slidewheel unit. The connecting rope that passes through the second slidewheel unit is connected to the third slidewheel unit and is diverted to a lateral side of the respective one of the at least one float by the third slidewheel unit.

The pivoting unit may include a rocking arm and a fourth slidewheel unit. The rocking arm is pivotally connected to the peripheral face of the rotor body. The fourth slidewheel unit is mounted to the rocking arm. The connecting rope is wound around and passes through the first slidewheel unit, the second slidewheel unit, the third slidewheel unit and the fourth slidewheel unit in sequence. The connecting rope is fixed to the rotor.

The pivoting unit may include a rolling member rotatably mounted to a free end of the rocking arm. The rolling member moves along the guiding track.

Alternatively, the pivoting unit may include a pivoting frame, a rocking arm and a rolling member. The pivoting frame is pivotally connected to the peripheral face of the rotor body. The connecting rope is wound around and passes through the first slidewheel unit and the second slidewheel unit in sequence. The connecting rope is fixed to the pivoting frame. The rocking arm is fixed to the pivoting frame. The rolling member is rotatably mounted to a free end of the rocking arm and moves along the guiding track.

The isolating member is made of an elastic leakproof material. An end of the isolating member is fixed to the peripheral face of the rotor body, and another end of the isolating member is fixed to an outer face of the housing.

The outer surface of the housing is arcuate and has a curvature corresponding to a curvature of the peripheral face of the rotor body. The outer surface of the housing and the peripheral face of the rotor body form a continuous arcuate face when the housing retracts into the interior of the rotor body in a maximal extension magnitude.

The invention further provides a method for generating kinetic energy using the buoyancy-driven kinetic energy generating apparatus, which comprises filling a liquid into the tank to provide the rotor body with a pre-buoyancy, and controlling the at least one float to telescope relative to the rotor body, causing a change in local buoyancy of the rotor body to imbalance the rotor body and to cause rotation of the rotor body about the rotating axis. Each of the at least one float completes a telescopic cycle while the float rotates a turn together with the rotor body about the rotating axis. The telescopic cycle includes a float hidden stroke, a float gradual extending stroke, a float completely exposed stroke and a float gradual retracting stroke in sequence. The tank includes a float hidden section, a float gradual extending section, a float completely exposed section and a float gradual retracting section in sequence in a rotating direction of the rotor. The float hidden section corresponds to the float hidden stroke. Each of the at least one float maintains in a maximal retraction state having a maximal retraction magnitude when located in the float hidden section. When each of the at least one float is driven by the rotating rotor body to move from the float hidden section into the float gradual extending section, the float undergoes the float gradual extending stroke, and the extension magnitude of the float increases gradually until the float enters the float completely exposed section where the extension magnitude of the float is maximal. The float completely exposed section corresponds to the float completely exposed stroke. Each of the at least one float undergoes the float completely exposed stroke in the float completely exposed section and maintains a maximal extension magnitude to drive the rotor body to rotate. Each of the at least one float is driven by the rotating rotor body to move from the float completely exposed section into the float gradual retracting section. When the float undergoes the float gradual retracting stroke, the extension magnitude of the float decreases gradually in the float gradual retracting section until the float enters the float hidden section and then undergoes the float hidden stroke in the maximal retraction state.

The float gradual extending section is located below a level of the liquid, and the float gradual retracting section is located above the level of the liquid.

The float gradual extending section may be located between a vertical line and a horizontal line. Each of the vertical and horizontal lines passes through the rotating center of the rotor body.

The float hidden section may be opposite to the float completely exposed section in a diametric direction of the rotor body, and the float gradual extending section may be opposite to the float gradual retracting section in a diametric direction of the rotor body. Furthermore, the float hidden section, the float gradual extending section, the float completely exposed section and the float gradual retracting section extend through a same angle.

The at least one float may include a first float and a second float opposed to the first float in a diametric direction of the rotor body. One of the first and second floats undergoes the float hidden stroke while another of the first and second floats undergoes the float completely exposed stroke. One of the first and second floats undergoes the float gradual extending stroke while the other of the first and second floats undergoes the float gradual retracting stroke.

The extension magnitude of the at least one float forms an arcuate path during the float gradual extending stroke, the float completely exposed stroke and the float gradual retracting stroke. The extension magnitude of the at least one float forms an arcuate path having increasing radiuses of curvature along with rotational movement of the rotor body about the rotating axis during the float gradual extending stroke. The extension magnitude of the at least one float forms an arcuate path having a uniform radius of curvature along with the rotational movement of the rotor body during the float completely exposed stroke. The extension magnitude of the at least one float forms an arcuate path having decreasing radiuses of curvature along with the rotational movement of the rotor body during the float gradual retracting stroke.

Thus, the buoyancy-driven kinetic energy generating apparatus of the invention has increased total buoyancy and has a lower resistance during operation, allowing smooth operation of the buoyancy-driven kinetic energy generating apparatus to enhance the kinetic energy generating efficiency. Furthermore, the buoyancy-driven kinetic energy generating apparatus has a simple structure to reduce the costs of manufacture, assembly, and maintenance.

### BRIEF DESCRIPTION OF THE DRAWINGS

FIG. 1 is a schematic view of a conventional buoyancy-driven kinetic energy generating device.
FIG. 2 is a perspective view of a buoyancy-driven kinetic energy generating apparatus of a first embodiment according to the present invention, with a portion of the buoyancy-driven kinetic energy generating apparatus cut away.
FIG. 3 is a cross sectional view of the buoyancy-driven kinetic energy generating apparatus of the first embodiment according to the present invention.
FIG. 4 is a partial, exploded perspective view of a float of the first embodiment according to the present invention.
FIG. 5 is an enlarged view of a portion of the float according to the present invention, with the float in an extended position, and with an isolating member unstretched.
FIG. 6 is an enlarged view of the portion of the float according to the present invention, with the float in a retracted position, and with the isolating member stretched.
FIG. 7 is a schematic diagram illustrating the extension magnitude of the float when a rotor according to the present invention rotates in a clockwise direction.
FIG. 8 is a first operational state of the first embodiment according to the present invention having a single float.
FIG. 9 is a second operational state of the first embodiment according to the present invention having a single float.
FIG. 10 is a third operational state of the first embodiment according to the present invention having a single float.
FIG. 11 is a fourth operational state of the first embodiment according to the present invention having a single float.
FIG. 12 is a first operational state of the first embodiment according to the present invention having three floats.
FIG. 13 is a second operational state of the first embodiment according to the present invention having three floats.
FIG. 14 is a third operational state of the first embodiment according to the present invention having three floats.
FIG. 15 is a partial, exploded, perspective view of a buoyancy-driven kinetic energy generating apparatus of a second embodiment according to the present invention.
FIG. 16 is a first operational state of the second embodiment according to the present invention having two floats.
FIG. 17 is a partial, side view of one of the floats of the second embodiment according to the present invention, with the float extending and retracting under guidance of two tracks.
FIG. 18 is a second operational state of the second embodiment according to the present invention having two floats.
FIG. 19 is a third operational state of the second embodiment according to the present invention having two floats.
FIG. 20 is a fourth operational state of the second embodiment according to the present invention having two floats.
FIG. 21 is a first operational state of a buoyancy-driven kinetic energy generating apparatus of a third embodiment according to the present invention having two floats.
FIG. 22 is a first operational state of a buoyancy-driven kinetic energy generating apparatus of a fourth embodiment according to the present invention having four floats.
FIG. 23 is a second operational state of the fourth embodiment according to the present invention having four floats.
FIG. 24 is an operational state of a buoyancy-driven kinetic energy generating apparatus of a fifth embodiment according to the present invention having four floats.
FIG. 25 is a schematic diagram illustrating the extension magnitude of the float when a rotor according to the present invention rotates in a counterclockwise direction.
FIG. 26 is an operational state of a sixth embodiment according to the present invention having four floats.
FIG. 27 is a perspective view of a buoyancy-driven kinetic energy generating apparatus of the sixth embodiment according to the present invention, with a portion of the buoyancy-driven kinetic energy generating apparatus cut away.
FIG. 28 is a perspective view of the buoyancy-driven kinetic energy generating apparatus according to the present invention, with the omission of the auxiliary positioning unit.
FIG. 29 is a perspective view of the buoyancy-driven kinetic energy generating apparatus of the sixth embodiment according to the present invention, which shows an operational state before the rolling member enters the movement control section of the guiding track.
FIG. 30 is a perspective view of the buoyancy-driven kinetic energy generating apparatus of the sixth embodiment according to the present invention, which shows an operational state after the rolling member enters the movement control section of the guiding track.
FIG. 31 is a perspective view of the buoyancy-driven kinetic energy generating apparatus of the sixth embodiment according to the present invention, which shows an operational state after the rolling member enters the maintaining section of the guiding track.
FIG. 32 is an operational state of a seventh embodiment according to the present invention having four floats.
FIG. 33 is a perspective view of a buoyancy-driven kinetic energy generating apparatus of the seventh embodiment according to the present invention, with a portion of the buoyancy-driven kinetic energy generating apparatus cut away.
FIG. 34 is a perspective view of the buoyancy-driven kinetic energy generating apparatus of the seventh embodiment according to the present invention, which shows an operational state before the rocking arm makes contact with the guiding track.
FIG. 35 is a perspective view of the buoyancy-driven kinetic energy generating apparatus of the seventh embodiment according to the present invention, which shows an operational state when the rocking arm makes contact with the guiding track.
FIG. 36 is a perspective view of the buoyancy-driven kinetic energy generating apparatus of the seventh embodiment according to the present invention, which shows an operational state after the rolling member enters the movement control section of the guiding track.
FIG. 37 is a perspective view of the buoyancy-driven kinetic energy generating apparatus of the seventh embodiment according to the present invention, which shows an operational state when the rolling member enters the maintaining section of the guiding track.
FIG. 38 is a schematic diagram illustrating the extension magnitude of the float when a rotor according to the seventh embodiment of the present invention rotates in a counterclockwise direction.

**[the present invention]**

| | | | |
|---|---|---|---|
| 1 | base | 11 | tank |
| 111 | support | 12 | shaft fixing portion |
| 2 | rotor | 21 | rotor body |
| 21a | end face | 21b | peripheral face |
| 211 | slot | 211a | first slot |
| 211b | second slot | 211c | third slot |
| 211d | fourth slot | 22 | shaft portion |
| 22a | shaft | 22b | shaft |
| 221 | shaft hole | 23 | outer track |
| 24 | ring | | |
| 3 | float | 3a, 3p | first float |
| 3b, 3c, 3q | second float | 3r | third float |
| 3s | fourth float | 31 | housing |
| 311 | liquid breaking portion | 32 | isolating member |
| 33 | guiding member | 331 | roller |
| 34 | limiting member | 35 | connecting module |
| 351 | fixing member | 352 | connecting rod |
| 4 | telescopic movement control module | | |
| 41 | control guiding member | 411 | positioning member |
| 412 | first maintaining section | | |
| 413 | first movement control section | | |
| 414 | second maintaining section | | |
| 415 | second movement control section | | |
| 42 | balancing unit | 42a | first balancing unit |
| 42b | second balancing unit | 421 | first support seat |
| 4211 | sleeve | 422 | second support seat |
| 4221 | axle | 423 | elastic returning member |
| 5 | telescopic movement control module | | |
| 51 | bracket | 52 | rail |
| 52a | start end | 52b | terminal end |
| 521 | movement control section | 522 | maintaining section |
| 53 | passage | | |
| 6 | telescopic movement control module | | |
| 61 | pressing board | 61a | start end |
| 61b | terminal end | 611 | movement control section |
| 612 | maintaining section | 62 | fastener |
| 7 | telescopic movement control module | | |
| 71 | guiding track | 71a | start end |
| 71b | terminal end | 711 | abutment face |
| 712 | movement control section | 713 | maintaining section |
| 72 | slidewheel unit | 721 | first slidewheel unit |
| 722 | positioning unit | 7221 | positioning support |
| 7222 | second slidewheel unit | 723 | pivoting unit |
| 7231 | pivoting frame | 7232 | rocking arm |
| 7233 | rolling member | 724 | auxiliary positioning unit |
| 7241 | auxiliary positioning support | 7242 | tension wheel |
| 73 | bracket | | |
| 8 | telescopic movement control module | | |
| 81 | guiding track | 81a | start end |
| 81b | terminal end | 811 | abutment face |
| 812 | movement control section | 813 | maintaining section |
| 82 | slidewheel unit | 821 | first slidewheel unit |
| 822 | positioning unit | 8221 | positioning support |
| 8222 | second slidewheel unit | 8223 | third slidewheel unit |
| 823 | pivoting unit | 8231 | rocking arm |
| 8232 | fourth slidewheel unit | 8233 | rolling member |
| F | level | F1 | maximal level |
| F2 | minimal level | F3 | middle level |
| L1, L1', L1" | telescopic movement end line | | |
| L2, L2', L2" | telescopic movement start line | | |
| L3 | telescopic movement end | line | |
| L4 | telescopic movement start line | | |
| P1, P2, P3, P4 | connection | R | connecting rope |
| V | vertical line | Z1 | float hidden section |
| Z2 | float gradual extending section | | |
| Z3 | float completely exposed section | | |
| Z4 | float gradual retracting section | | |

**[Prior Art]**

| | | | |
|---|---|---|---|
| 9 | buoyancy-driven kinetic energy generating device | | |
| 91 | tower | 92 | conveyor |
| 921 | bucket | 93 | rotary shaft |
| 94 | generator | 95 | bubble supply means |

### DETAILED DESCRIPTION OF THE INVENTION

The above objectives and other objectives, features and advantages of the present invention will become clearer in light of the following detailed description of illustrative embodiments of this invention described in connection with the drawings.

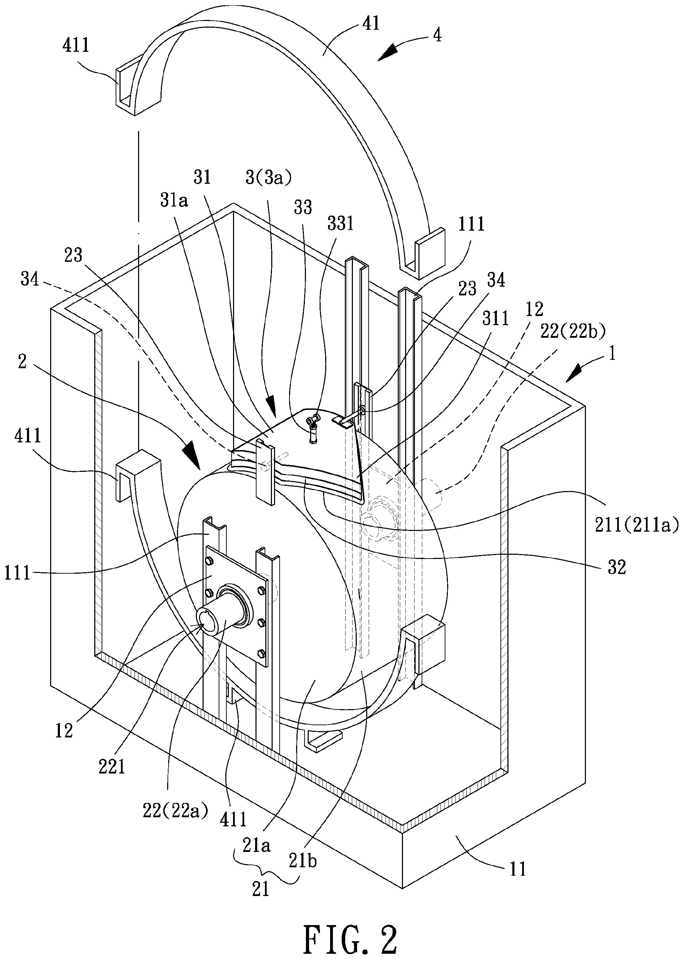

FIG. 2 shows a buoyancy-driven kinetic energy generating apparatus of a first embodiment according to the present invention. The buoyancy-driven kinetic energy generating apparatus generally includes a base 1, a rotor 2, at least one float 3, and a telescopic movement control module 4. The rotor 2 is rotatably mounted to the base 1. The at least one float 3 is telescopically mounted to the rotor 2. The telescopic movement control module 4 is mounted to the base 1 to control telescopic movement of the at least one float 3 relative to the rotor 2. In the first embodiment of the present invention, the quantity of the at least one float 3 may be 1, and is labeled as "first float 3a."

The base 1 is adapted to receive a flowable working medium, such as a liquid. The base 1 also provides assembling and positioning for the rotor 2 and the telescopic movement control module 4. Specifically, the base 1 includes a tank 11 and two shaft fixing portions 12. The tank 11 may receive the liquid. The shaft fixing portions 12 are respectively mounted to two opposite outer sides of the tank 11 respectively of two lateral walls of the tank 11. The shaft fixing portions 12 are coaxial with each other. In this embodiment, each shaft fixing portion 12 is a board with a bearing. Furthermore, a support 111 is mounted to each outer side of the tank 11, and a shaft fixing portion 12 is assembled and fixed to one of the outer sides of the tank 11 via one of the supports 111. Leakage-proof gaskets (not shown) can be mounted between the tank 11 and the shaft fixing portions 12 to prevent leakage of the liquid, such that a portion of the rotor 2 can extend through the lateral walls of the tank 11 without liquid leakage.

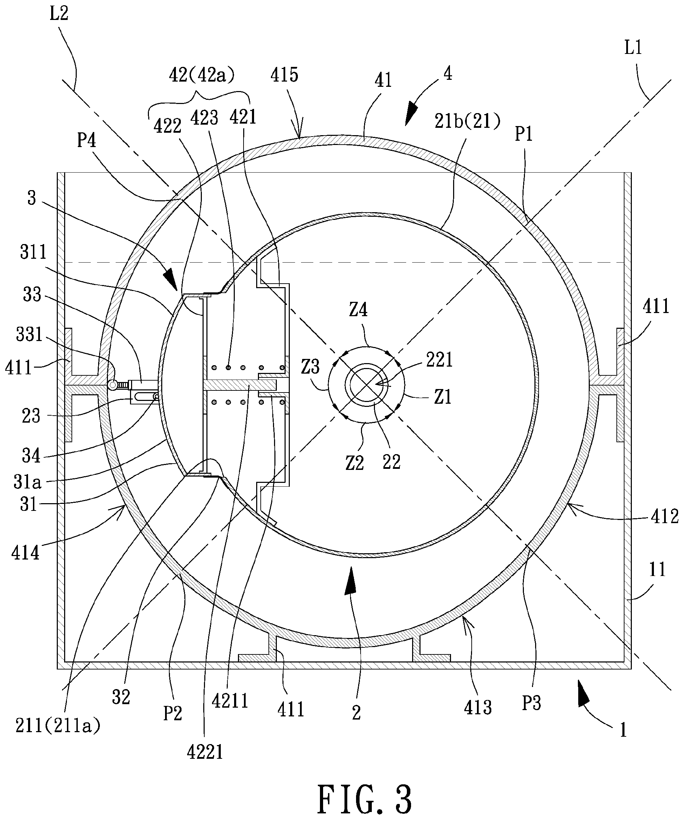

With reference to FIGS. 2 and 3, the rotor 2 is rotatably mounted to the base 1. Specifically, the rotor 2 includes a rotor body 21 and a shaft portion 22. The rotor body 21 includes a hollow interior for receiving a mass having a density smaller than a density of the liquid received in the tank 11. The mass can be a gas or a solid (such as expandable polystyrene or low-density wood). Alternatively, the rotor body 21 can be directly made of a low-density solid, and the liquid received in the tank 11 can provide sufficiency buoyancy to make the rotor body 21 float. In this embodiment, the rotor body 21 is in the form of a cylindrical housing having a hollow interior such that the easiest-to-obtain air can directly be contained in the interior of the rotor body 21 to reduce the costs. The rotor body 21 includes two opposite end faces 21a and a peripheral face 21b connected between the end faces 21a. A plurality of slots 211 is defined in the peripheral face 21b. The number of the slots 211 corresponds to that of the floats 3. For example, there is only one float 3 in this embodiment. Thus, only a first slot 211a is defined in the peripheral face 21b.

The shaft portion 22 of the rotor 2 extends through the end faces 21a of the rotor body 21 to connect the shaft fixing portions 12 of the base 1, allowing the rotor body 21 to be received in the tank 11 and to rotate in the tank 11 about a rotating axis defined by the shaft portion 22 and passing a rotating center of the rotor body 21. In this embodiment, the shaft portion 22 includes two coaxially located shafts 22a and 22b, with each shaft 22a, 22b having a shaft hole 221. Each shaft 22a, 22b includes an end mounted to one of the end faces 21a of the rotor body 21. The other end of each shaft 22a, 22b extends through the tank 11 and is connected to one of the shaft fixing portions 12. Thus, the interior of the rotor body 21 intercommunicates with the outside of the tank 11 via the shaft holes 221. By such an arrangement, the rotor body 21 of the rotor 2 can rotate in the tank 11 relative to the base 1 while the interior of the rotor body 21 is empty for receiving other components to reduce limitation to the spatial arrangement of the components. Furthermore, the overall weight of the rotor 2 can be reduced to increase convenience during assembly. Furthermore, the shaft portion 22 can be in the form of a single shaft extending through the rotor body 21 while allowing the rotor body 21 to rotate in the tank 11 relative to the base 1, which can be appreciated and can be modified by one having ordinary skill in the art. The present invention is not limited to the embodiment shown. Furthermore, the rotor 2 can include a plurality of outer tracks 23 respectively mounted to the end faces 21a of the rotor body 21 (namely, the plurality of outer tracks 23 is connected to the rotor body 21) to guide the telescopic movement of the first float 3a.

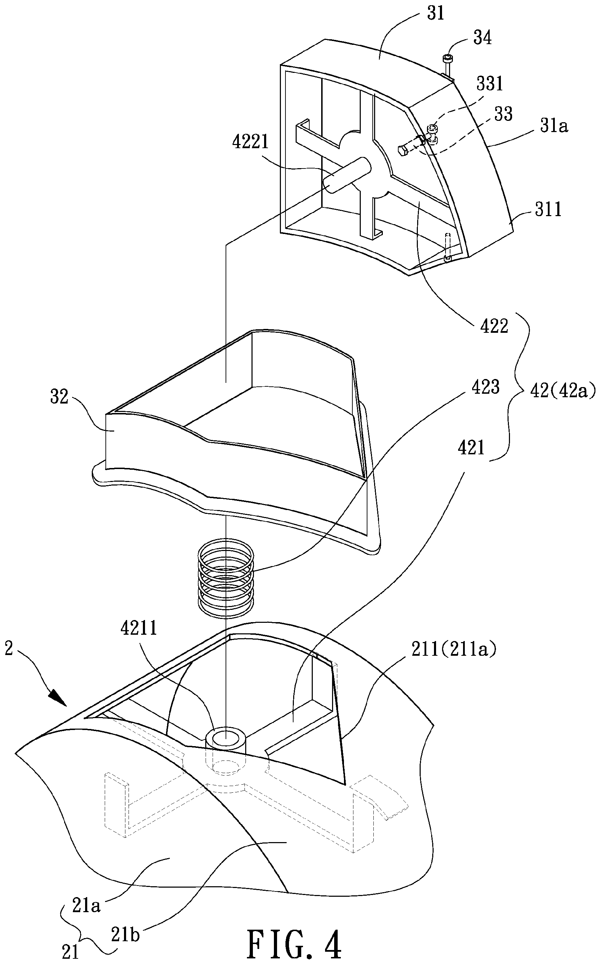

The first float 3a is telescopically mounted to the rotor body 21. In the embodiment shown in FIGS. 2 and 3, the first float 3a is mounted to the peripheral face 21b of the rotor body 21 to telescopically move in a radial direction of the rotor body 21 perpendicular to the rotating axis of the rotor body 21. Specifically, with reference to FIGS. 3 and 4, the first float 3a includes a housing 31 and an isolating member 32. An interior of the housing 31 provides a space with a predetermined volume. The housing 31 has an open end. When the housing 31 is mounted in the first slot 211a of the rotor body 21, the open end of the housing 31 faces the interior of the rotor body 21. Furthermore, the housing 31 is connected to the rotor body 21 via the isolating member 32 to assure that the interior space of the rotor body 21 is isolated from the liquid in the tank 11.

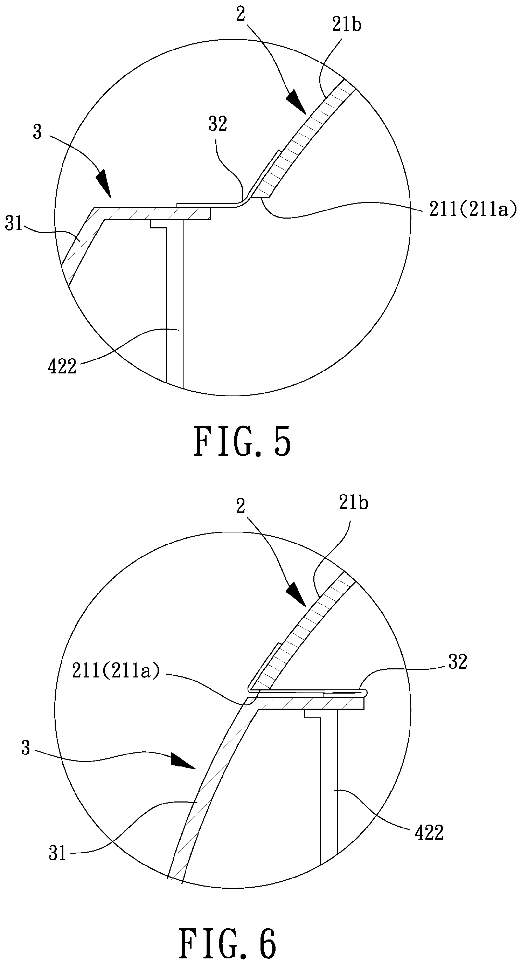

In this embodiment, the isolating member 32 is made of an elastic leakproof material. An end of the isolating member 32 is fixed to the peripheral face 21b of the rotor body 21. The other end of the isolating member 32 is fixed to an outer face of the housing 31 such that the liquid in the tank 11 will not leak into the housing 31 and the rotor body 21. Furthermore, the connection between the isolating member 32 and the rotor body 21 is gapless and can be achieved by, for example, gluing, and several fasteners (not shown) can be provided tighten the isolating member 32 and the rotor body 21 to increase the engagement reliability. By such an arrangement, with reference to FIG. 5, when the first float 3a is in an unretracted state (or is extending) relative to the peripheral face 21b of the rotor body 21, the isolating member 32 is in an unstretched state (or gradually returns to the unstretched state). On the other hand, with reference to FIG. 6, when the first float 3a retracts relative to the peripheral face 21b of the rotor body 21, the isolating member 32 can be continuously stretched and undergo elastic deformation. Thus, the magnitude of the telescopic movement of the housing 31 of the first float 3a relative to the rotor body 21 can be increased by the isolating member 32.

Still referring to FIGS. 3 and 4, the outer surface of the housing 31 can be arcuate and preferably has a curvature corresponding to a curvature of the peripheral face 21b of the rotor body 21. Thus, when the housing 31 retracts into the interior of the rotor body 21, the outer surface of the housing 31 and the peripheral face 21b of the rotor body 21 can form a continuous arcuate face to reduce the resistance while entering the liquid. The housing 31 further includes a liquid breaking portion 311 in a front end of the housing 31 in the rotating direction. The liquid breaking portion 311 has an protruding edge. The protruding edge have two side faces meeting each other at a center of the protruding edge and respectively connect to two lateral edges of the housing 31. The liquid breaking portion 311 reduces the resistance when the first float 3a floats upward and increases the floating speed. Furthermore, the first float 3a further includes a guiding member 33 and a plurality of limiting member 34 on the outer surface of the housing 31. Optionally, the guiding member 33 may be mounted on a center of the outer surface of the housing 31. Preferably, the length of the guiding member 33 is adjustable. A roller 331 is mounted to a free end of the guiding member 33. When the guiding member 33 contacts the telescopic movement control module 4, the roller 331 smoothly and continuously moves on the telescopic movement control module 4. The limiting members 34 can be located adjacent to two lateral edges of the outer surface of the housing 31 and are respectively restrained in the outer tracks 23, such that the housing 31 are restricted and can only move along a guiding direction provided by the outer tracks 23.

With reference to FIGS. 2, 3, and 4, the telescopic movement control module 4 is mounted in the tank 11 of the base 1 to control the telescopic movement of the first float 3a relative to the rotor body 21 during rotation of the rotor body 21. In this embodiment, the telescopic movement control module 4 includes a control guiding member 41 and a first balancing unit 42a. The control guiding member 41 is mounted to an inner wall of the tank 11. The first balancing unit 42a is mounted between the first float 3a and the rotor body 21 to actuate the first float 3a. The first balancing unit 42a balances forces imparted to the inner and outer sides of the first float 3a, maintaining contact between the first float 3a and the control guiding member 41.

Specifically, the control guiding member 41 is substantially a ring and includes a plurality of positioning members 411 fixed to the inner wall of the tank 11 such that the control guiding member 41 is received in the tank 11 and surrounds the rotor body 21. To increase the assembling convenience, the control guiding member 41 can be comprised of a plurality of arcuate boards coupled to each other, with the arcuate boards having the same or different lengths, which can be modified by one having ordinary skill in the art according to needs. The present invention is not limited to the embodiment shown.

The control guiding member 41 includes a first maintaining section 412, a first movement control section 413, a second maintaining section 414, and a second movement control section 415, with the first maintaining section 412, the first movement control section 413, the second maintaining section 414, and the second movement control section 415 connected to each other in sequence. The second movement control section 415 is connected to the first maintaining section 412, such that the control guiding member 41 includes a continuous, closed, annular inner surface. The inner surface of the first maintaining section 412 and the inner surface of the second maintaining section 414 are concentric to the peripheral face 21b of the rotor body 21. A radius of curvature of the first maintaining section 412 is smaller than a radius of curvature of the second maintaining section 414. A spacing between the inner surface of the first movement control section 413 and the rotating center of the rotor body 21 increases from a connection end of the first movement control section 413 connected to the first maintaining section 412 towards another connection end of the first movement control section 413 connected to the second maintaining section 414. A spacing between the inner surface of the second movement control section 415 and the rotating center of the rotor body 21 decreases from a connection end of the second movement control section 415 connected to the second maintaining section 414 towards another connection end of the second movement control section 415 connected to the first maintaining section 412.

The first maintaining section 412 is connected to the second movement control section 415 at a connection P1. The first movement control section 413 is connected to the second maintaining section 414 at a connection P2. A line section passing through the connection P1 and the rotating center of the rotor body 21 and another line section passing through the connection P2 and the rotating center of rotor body 21 together define a telescopic movement end line L1. Preferably, the connections P1 and P2 are opposed to each other in a diametric direction of the rotor body 21 such that the telescopic movement end line L1 is rectilinear. Furthermore, the first maintaining section 412 is connected to the first movement control section 413 at a connection P3. The second maintaining section 414 is connected to the second movement control section 415 at a connection P4. A line section passing through the connection P3 and the rotating center of the rotor body 21 and another line section passing through the connection P4 and the rotating center of rotor body 21 together define a telescopic movement start line L2. Preferably, the connections P3 and P4 are opposed to each other in a diametric direction of the rotor body 21 such that the telescopic movement start line L2 is rectilinear. Furthermore, the telescopic movement end line L1 is orthogonal to the telescopic movement start line L2.

With reference to FIGS. 3 and 4, the first balancing unit 42a includes a first support seat 421, a second support seat 422, and an elastic returning member 423. The first support seat 421 is fixed to an inner wall of the rotor body 21. The second support seat 422 is fixed to an inner wall of the housing 31 of the first float 3a. Furthermore, the second support seat 422 is movable relative to the first support seat 421 in a radial direction of the rotor body 21. As an example, the first support seat 421 includes a sleeve 4211. The second support seat 422 includes an axle 4221 movably received in the sleeve 4211. Alternatively, the axle can be provided on the first support seat 421, and the sleeve can be provided on the second support seat 422.

The elastic returning member 423 is a member with elastic deforming capacity, such as a spring or a resilient plate. Two ends of the elastic returning member 423 respectively press against the first support seat 421 and the second support seat 422 to balance the forces exerted on the inner and outer sides of the first float 3a. When the first float 3a is pushed by the control guiding member 41, the elastic returning member 423 presses against the second support seat 422 such that the first float 3a keeps contacting the control guiding member 41. On the other hand, when the first float 3a is pulled by the control guiding member 41, the elastic returning member 423 pulls the second support seat 422 such that the first float 3a keeps contacting the control guiding member 41. In this embodiment, the elastic returning member 423 is in the form of a compression spring mounted around the sleeve 4211. The sleeve 4211 assures that the elastic returning member 423 merely has axial deformation. In other embodiments, the first balancing unit 42a can include electrically controlled components or hydraulic or pneumatic cylinder components for actuating the first float 3a.

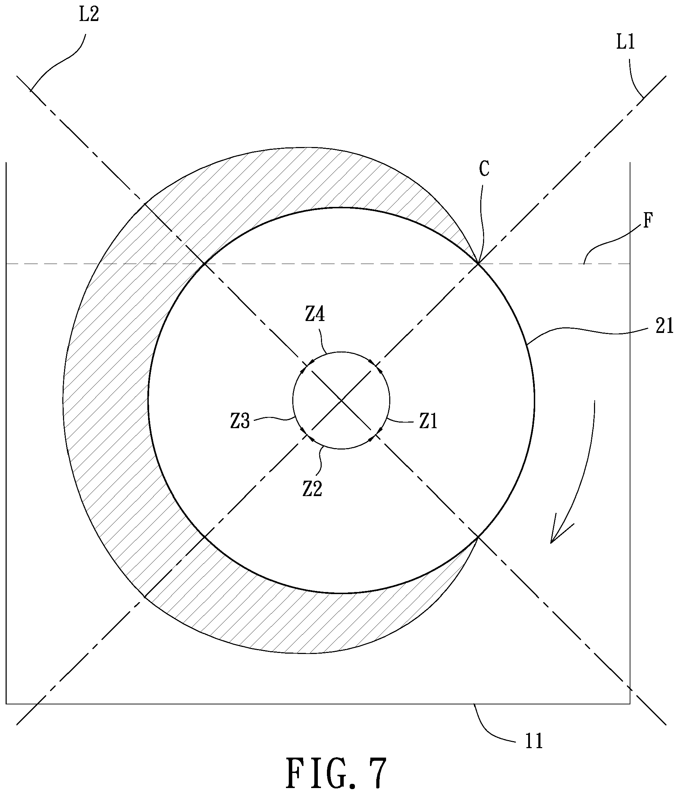

Please refer reference to FIGS. 3 and FIG. 7. FIG. 7 is a schematic diagram illustrating the extension magnitude of the first float 3a when the rotor 2 according to the present invention rotates in a clockwise direction. The hatching area in FIG. 7 indicates the extension magnitude of the first float 3a in the tank 11. When the buoyancy-driven kinetic energy generating apparatus operates, the first float 3a completes a telescopic cycle relative to the peripheral face 21b of the rotor body 21 while the first float 3a rotates a round together with the rotor body 21. Each telescopic cycle includes four strokes: a float hidden stroke, a float gradual extending stroke, a float completely exposed stroke, and a float gradual retracting stroke. The first float 3a maintains in a state having the maximal retraction magnitude (i.e., the extension magnitude is minimal) during the float hidden stroke. The extension magnitude of the first float 3a increases gradually during the float gradual extending stroke. The first float 3a maintains in a state having the maximal extension magnitude during the float completely exposed stroke. The extension magnitude of the first float 3a gradually decreases during the float gradual retracting stroke. The first float 3a has the maximal retraction magnitude when the first float 3a returns to the float hidden stroke.

The telescopic movement end line L1 and the telescopic movement start line L2 divide the movement plane into four sections (starting from the telescopic movement end line L1 in the rotating direction of the rotor 2): a float hidden section Z1, a float gradual extending section Z2, a float completely exposed section Z3, and a float gradual retracting section Z4. The float hidden section Z1, the float gradual extending section Z2, the float completely exposed section Z3, and the float gradual retracting section Z4 respectively correspond to the float hidden stroke, the float gradual extending stroke, the float completely exposed stroke, and the float gradual retracting stroke. Namely, the float hidden section Z1, the float gradual extending section Z2, the float completely exposed section Z3, and the float gradual retracting section Z4 respectively correspond to the first maintaining section 412, the first movement control section 413, the second maintaining section 414, and the second movement control section 415 of the control guiding member 41, such that the first float 3a can undergo the float hidden stroke, the float gradual extending stroke, the float completely exposed stroke, and the float gradual retracting stroke. Furthermore, the liquid contained in the tank 11 preferably has a level F at the upper portion of the rotor body 21 where the telescopic movement end line L1 passes the rotor body 21 (see point C in FIG. 7), such that the float gradual extending section Z2 is located below the level F and such that the float gradual retracting section Z4 is located above the level F. This assures that when the first float 3a enters the float gradual retracting section Z4, the first float 3a can smoothly retract into the interior of the rotor body 21 in the air without resistance caused by the liquid and can enter the liquid in the maximal retraction state. The resistance to the rotation of the rotor body 21 at the moment the first float 3a entering the liquid and affected by the liquid resistance can be reduced, enhancing the overall kinetic energy generating efficiency of the buoyancy-driven kinetic energy generating apparatus.

By such an arrangement, the float hidden stroke of the first float 3a corresponds to the float hidden section Z1 and maintains the maximal retraction magnitude (i.e., the minimal extension magnitude). When the first float 3a is driven by the rotating rotor body 21 to move from the float hidden section Z1 into the float gradual extending section Z2, the first float 3a undergoes the float gradual extending stroke, and the extension magnitude of the first float 3a increases gradually until the first float 3a enters the float completely exposed section Z3 where the extension magnitude of the first float 3a is maximal. The first float 3a undergoes the float completely exposed stroke in the float completely exposed section and maintains its maximal extension magnitude to drive the rotor body 21 to rotate. The first float 3a is driven by the rotating rotor body 21 to move from the float completely exposed section Z3 into the float gradual retracting section Z4. Next, the first float 3a undergoes the float gradual retracting stroke, and the extension magnitude of the float decreases gradually in the float gradual retracting section Z4 until the first float 3a enters the float hidden section Z1 and then undergoes the float hidden stroke in its maximal retraction state.

Accordingly, the extension magnitude of the first float 3a (the travel of the roller 331) of the present invention forms an arcuate path during the float gradual extending stroke, the float completely exposed stroke, and the float gradual retracting stroke. The arcuate path effectively reduces the rotational resistance to the rotor body 21 and maintains smooth rotation of the rotor body 21. In this embodiment, during the float gradual extending stroke of the first float 3a, the extension magnitude of the first float 3a (the travel of the roller 331) forms an arcuate path having increasing radiuses of curvature along with the rotational movement of the rotor body 21. During the float completely exposed stroke of the first float 3a, the extension magnitude of the first float 3a (the travel of the roller 331) forms an arcuate path having a uniform radius of curvature along with the rotational movement of the rotor body 21. During the float gradual retracting stroke of the first float 3a, the extension magnitude of the first float 3a (the travel of the roller 331) forms an arcuate path having decreasing radiuses of curvature along with the rotational movement of the rotor body 21.

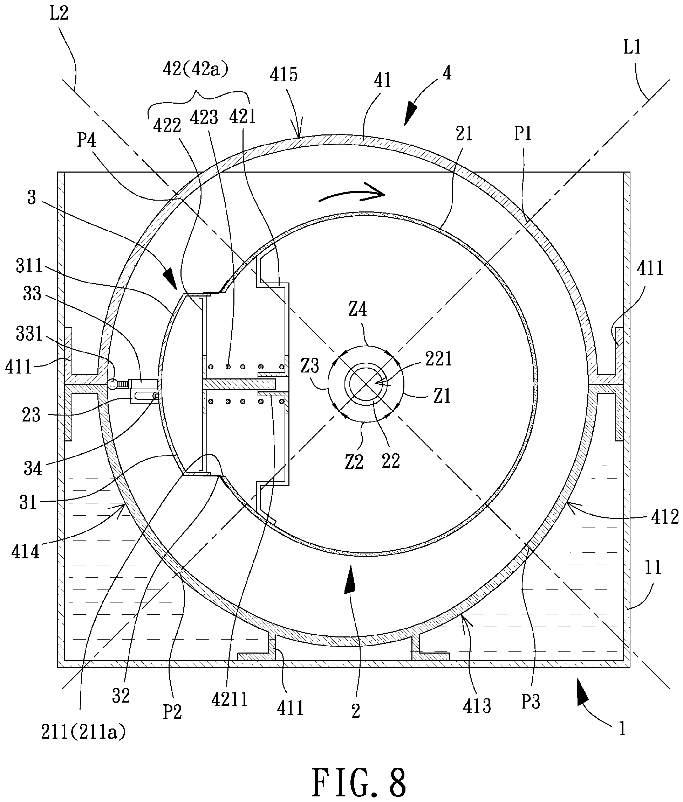

With reference to FIG. 3, in the buoyancy-driven kinetic energy generating apparatus of the first embodiment according to the present invention, when the tank 11 has not been filled with a sufficient amount of liquid, the first float 3a can be set to be located in the float completely exposed section Z3, and the first balancing unit 42a presses against the housing 31, such that the roller 331 of the guiding member 33 of the first float 3a contacts the second maintaining section 414 of the control guiding member 41, with the first float 3a in the maximal extension state. With reference to FIG. 8, when the tank 11 is filled with a sufficient amount of liquid, the rotor body 21 can create a great pre-buoyancy in the liquid. At the same time, since the density of the air in the interior space of the housing 31 is smaller than the density of the liquid in the tank 11, the first float 3a in the float completely exposed section Z3 and having the maximal extension magnitude additionally and locally increases the buoyancy of the rotor body 21 to imbalance the rotor body 21. As a result, the rotor body 21 starts to rotate.

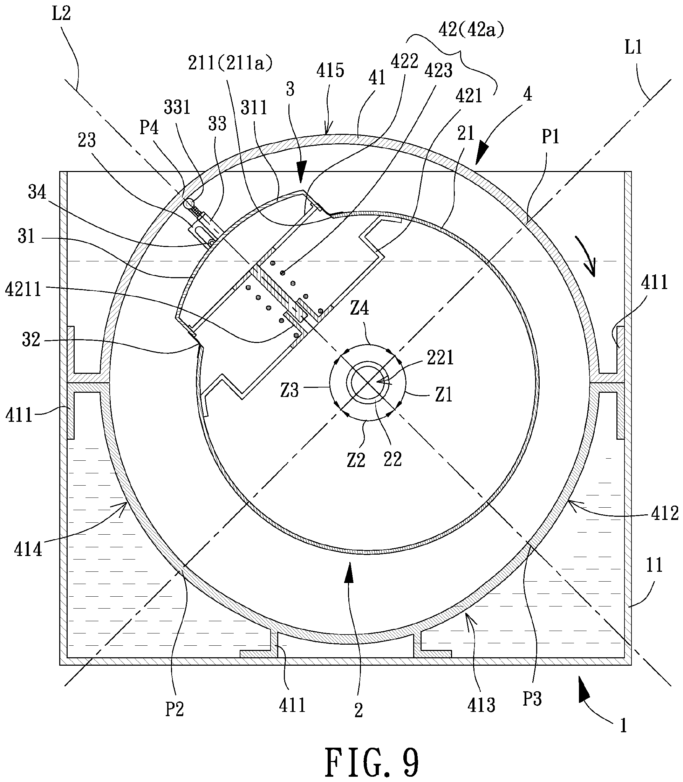

With reference to FIG. 9, after the first float 3a rotates jointly with the rotor body 21 and passes through the connection P4 between the second maintaining section 414 and the second movement control section 415, the control guiding member 41 starts to push the first float 3a by the second movement control section 415 to make the first float 3a undergo the float gradual retracting stroke, gradually reducing the extension magnitude of the first float 3a and gradually retracting the first float 3a into the interior of the rotor body 21. The rotor body 21 continues its rotation, and the first float 3a emerges from the liquid to a position above the level F while the float enters the float gradual retracting section Z4 in which the first float 3a continuously retracts into the interior of the rotor body 21. The liquid breaking portion 311 of the first float 3a assists in reducing the resistance of the housing 31 moving in the liquid, increasing the rotational movement of the rotor body 21 carrying the first float 3a while reducing unnecessary loss of the kinetic energy to enhance the efficacy of the buoyancy-driven kinetic energy generating apparatus.

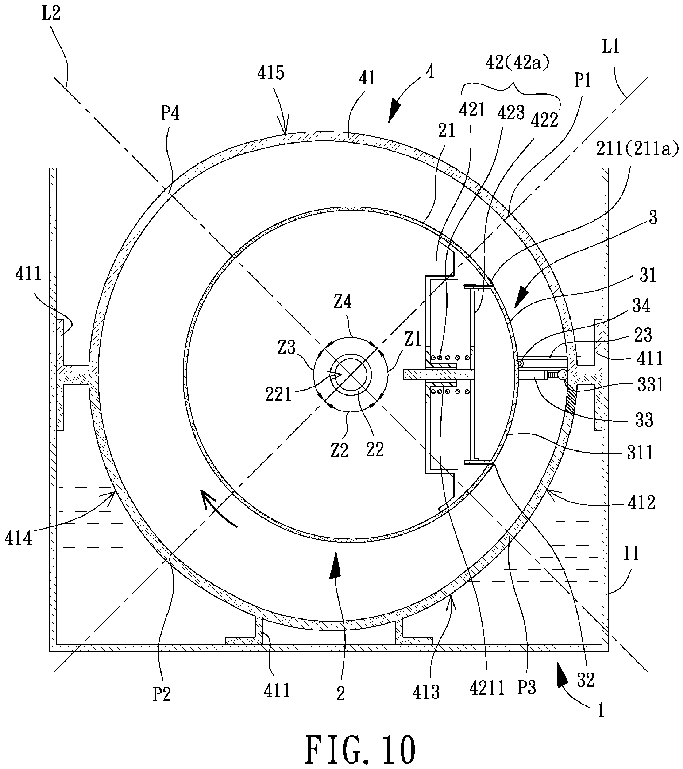

With reference to FIG. 10, the first float 3a rotates jointly with the rotor body 21 and is gradually compressed to reduce the extension magnitude until the first float 3a moves to the connection P1 between the second movement control section 415 and the first maintaining section 412. Since the first float 3a at the connection P1 has the maximal retraction magnitude, the first float 3a reenters the liquid with the minimal resistance and enters the float hidden section Z1. In the float hidden section Z1, the control guiding member 41 stops pushing the first float 3a, and the first maintaining section 412 of the control guiding member 41 keeps the first float 3a in the state having the maximal retraction magnitude.

After the first float 3a rotates jointly with the rotor body 21 and passes the connection P3 between the first maintaining section 412 and the first movement control section 413, the first balancing unit 42a presses against the housing 31 of the first float 3a to keep the roller 331 of the guiding member 33 of the first float 3a contacting the first movement control section 413 of the control guiding member 41. Then, the first float 3a undergoes the float gradual extending stroke, and the extension magnitude of the first float 3a beyond the outer surface of the rotor body 21 increases gradually in the float gradual extending section Z2. Thus, the buoyancy is gradually increased to assist in rotation of the rotor body 21.

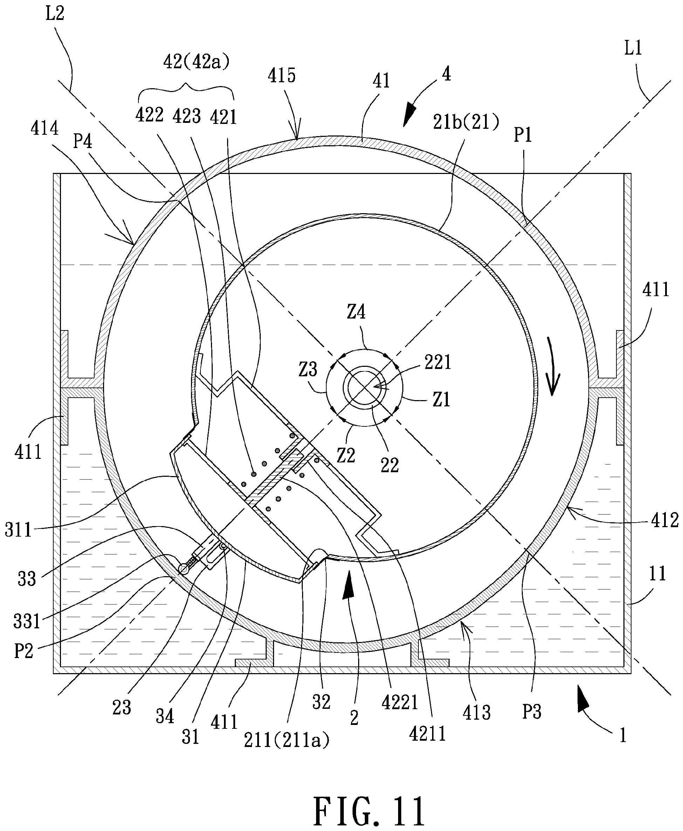

With reference to FIG 11, finally, the first float 3a rotates jointly with the rotor body 21 and passes through the connection P2 between the first control movement section 413 and the second maintaining section 414. Then, the first float 3a reenters the float completely exposed section Z3, completing a telescopic cycle.

In brief, in the buoyancy-driven kinetic energy generating apparatus of the first embodiment according to the present invention, the first balancing unit 42a keeps the first float 3a contacting the control guiding member 41, and the first float 3a telescopes relative to the rotor body 21 under the guidance by the first maintaining section 412, the first movement control section 413, the second maintaining section 414, and the second movement control section 415 to finish the float hidden stroke, the float gradual extending stroke, the float completely exposed stroke, and the float gradual retracting stroke in a telescopic cycle, providing assistance in rotation of the rotor body 21. By such arrangement, when the shaft portion 22 of the rotor body 21 is connected to a generator or a device directly driven by shaft work, the buoyancy-driven kinetic energy generating apparatus according to the present invention can use buoyancy to generate kinetic energy, and the shaft portion 22 of the rotor body 21 drives the generator to generate electricity or directly actuates the shaft work-driven device, meeting the development trend of green energy.

With reference to FIG. 5, note that the extension magnitude of the housing 31 of the first float 3a relative to the rotor body 21 is increased by the isolating member 32. With reference to FIG. 10, during the float hidden stroke of the first float 3a, the housing 31 of the first float 3a retracts to a position in which the outer surface of the housing 31 is flush with the outer surface of the rotor body 21 to form a continuous arcuate surface, reducing the resistance while entering the liquid. With reference to FIG. 8, during the float completely exposed stroke of the first float 3a, the housing 31 of the first float 3a fully extends beyond the outer surface of the rotor body 21, and the bottom end of the housing 31 of the first float 3a is also located outside of the outer surface of the rotor body 21 such that the housing 31 is merely connected to the rotor body 21 by the isolating member 32. This increases the buoyancy of the first float 3a and, thus, enhances the operational efficiency of the buoyancy-driven kinetic energy generating apparatus. Furthermore, in a case that the buoyancy-driven kinetic energy generating apparatus includes only one first float 3a and it is difficult to reduce the friction between the components, to assure that the kinetic energy generated by the buoyancy-driven kinetic energy generating apparatus meets the expectation, a plurality of the buoyancy-driven kinetic energy generating apparatuses can be connected in series, and the first floats 3a of the buoyancy-driven kinetic energy generating apparatuses are located in different phase positions (i.e., the first floats 3a of the buoyancy-driven kinetic energy generating apparatuses are alternately disposed). The buoyancy-driven kinetic energy generating apparatuses can operate simultaneously to continuously provide assistance in rotation, increasing the operational efficiency of each buoyancy-driven kinetic energy generating apparatus.

In other embodiments, the buoyancy-driven kinetic energy generating apparatus can include a plurality of floats 3 (odd-numbered or even-numbered floats 3) to continuously provide assistance in rotation of the rotor body 21, increasing the operational efficiency of the buoyancy-driven kinetic energy generating apparatus. Preferably, the floats are provided on the peripheral face 21b of the rotor body 21 at regular intervals to further increase the stability during rotation of the rotor body 21.

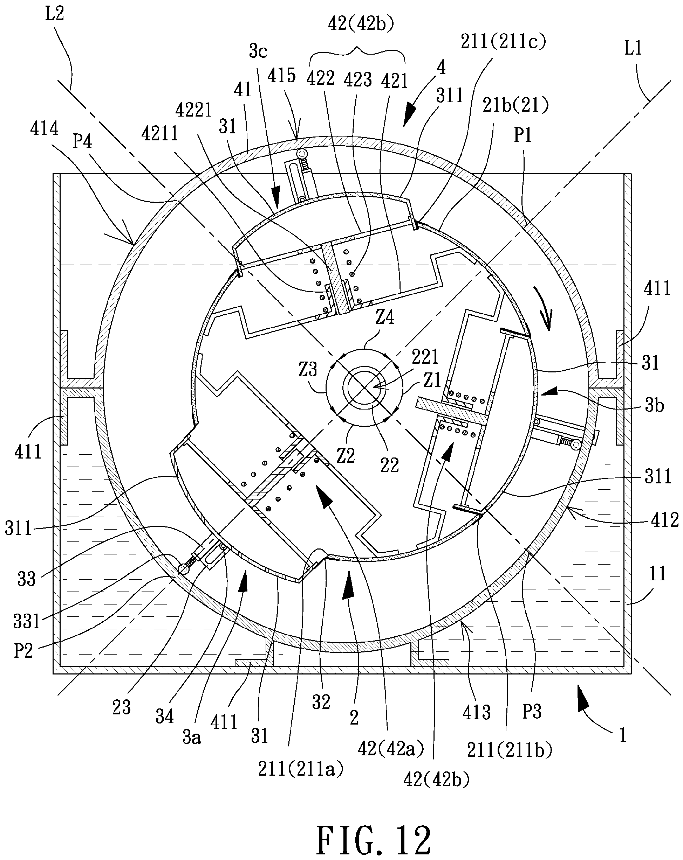

In a non-restricting embodiment shown in FIGS. 12-14, the buoyancy-driven kinetic energy generating apparatus includes three floats (a first float 3a and two second floats 3b and 3c). The peripheral face 21b further includes two second slots 211b for receiving the two second floats 3b and 3c. The telescopic movement control module 4 further includes a plurality of second balancing units 42b. The second balancing units 42b are mounted in the interior of the rotor body 21 to respectively actuate the two second floats 3b and 3c, maintaining the contact between the two second floats 3a and 3b and the control guiding member 41. Thus, each of the first float 3a and the second floats 3b and 3c can complete a telescopic cycle relative to the peripheral face 21b of the rotor body 21 while the first and second floats 3a, 3b and 3c rotate a turn together with the rotor body 21. In the state shown in FIG. 12, the first float 3a is at the connection P2 between the first control movement section 413 and the second maintaining section 414. Namely, the first float 3a has finished the float gradual extending stroke and is about to undergo the float completely exposed stroke (the first float 3a is about to move from the float gradual extending section Z2 into the float completely exposed section Z3). In this state, the extension magnitude of the first float 3a is maximal to provide assistance in rotation of the rotor 2. At the same time, the second float 3b is in the float hidden section Z1 and undergoes the float hidden stroke, with the second float 3b maintaining the maximal retraction magnitude to avoid resistance to rotation of the rotor 2. The other second float 3c is located in the float gradual retracting section Z4 and undergoes the float gradual retracting stroke during which the second float 3c gradually retracts into the interior of the rotor body 21. By such an arrangement, the first float 3a can smoothly drive the rotor 2 to rotate.

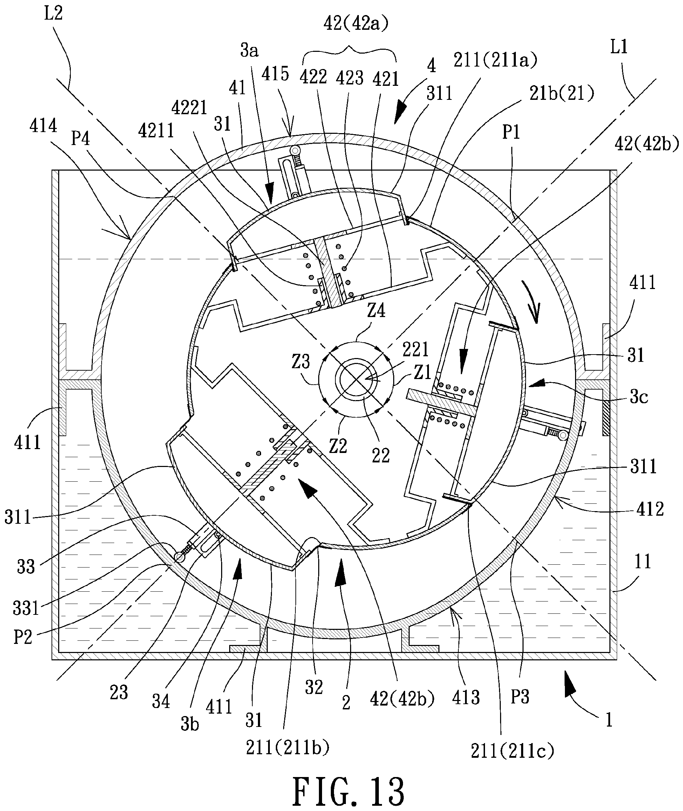

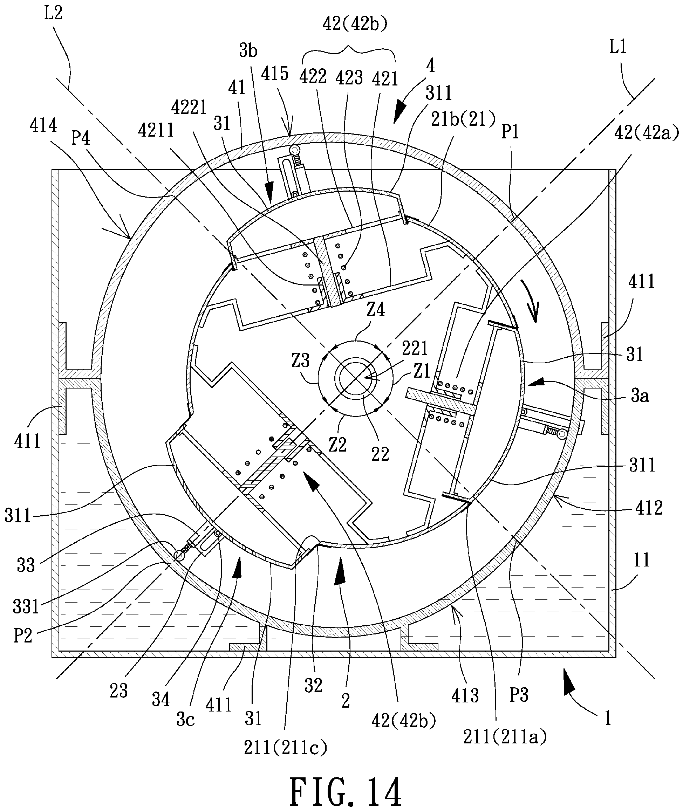

With reference to FIG. 13, next, the first float 3a leaves the float completely exposed section Z3 and enters the float gradual retracting section Z4. At the same time, the second float 3b enters the float gradual extending section Z2 and then the float completely exposed section Z3 to take over assistance in rotation of the rotor 2. With reference to FIG. 14, when the first float 3a leaves the float gradual retracting section Z4 and enters the float hidden section Z1, the second float 3c enters the float gradual extending section Z2 and then the float completely exposed section Z3 to take over assistance in rotation of the rotor 2. Thus, by sequential assistance in rotation of the rotor 2 from the first float 3a, the second float 3b, and the second float 3c, the rotor 2 can easily overcome the friction between the components and maintains smooth rotation, enhancing the operational efficiency of the buoyancy-driven kinetic energy generating apparatus.

With reference to FIGS. 5 and 12, note that the length of each float 3 (the first float 3a, the second float 3b, the second float 3c) can be reduced by provision of the isolating member 32. Furthermore, during the float completely exposed stroke of each float 3, the bottom of the housing 31 of the float 3 can extend beyond the outer surface of the rotor body 21, and the housing 31 is still connected to the rotor body 21 by the isolating member 32. Thus, the float 3 can generate buoyancy corresponding to the total area of the housing 31 and the isolating member 32 beyond the outer surface of the rotor body 21. On the other hand, during the float hidden stroke of each float 3, the housing 31 of the float 3 completely retracts into the rotor body 21 without occupying a large space. Thus, in the embodiment shown in FIGS. 12-14, the bottoms of the second support seats 422 of the balancing units 42 does not have to be close to the rotating center of the rotor body 21, avoiding interference between the balancing units 42 to increase assembling convenience.

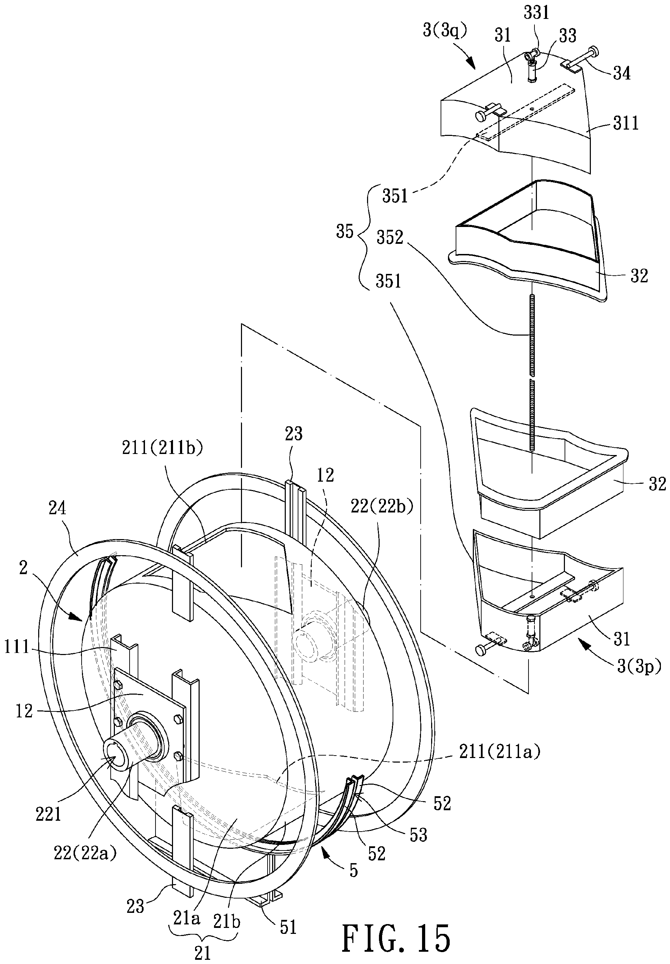

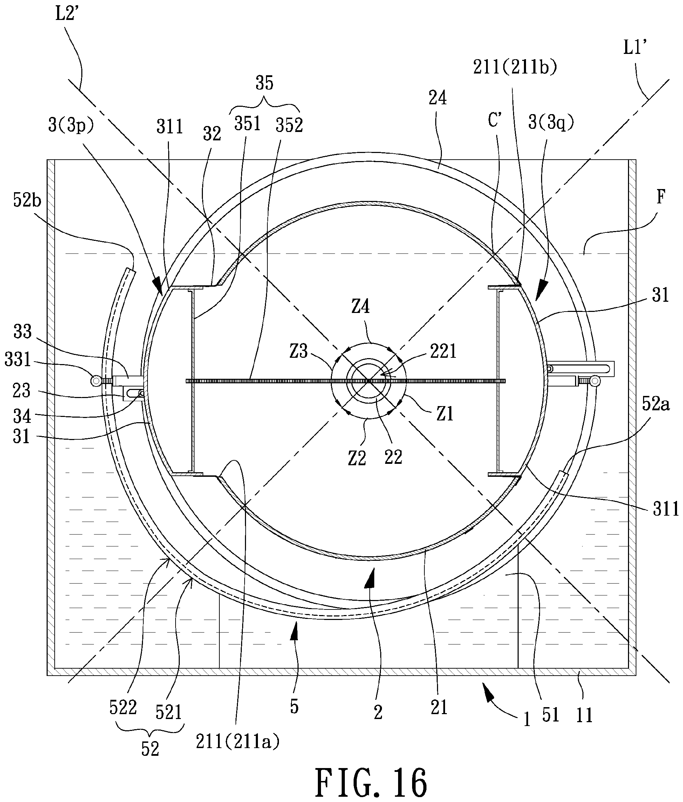

With reference to FIGS. 15 and 16, a buoyancy-driven kinetic energy generating apparatus of a second embodiment according to the present invention generally includes a base 1, a rotor 2, two floats 3, and a telescopic movement control module 5. The second embodiment is substantially the same as the first embodiment. The main differences between the first and second embodiments are that the number of floats 3 in the second embodiment is two (i.e. the first float 3p and the second float 3q), and the first and second floats 3p and 3q are opposite to each other in a diametric direction of the rotor body 21 and can move synchronously in a radial direction relative to the rotor body 21. The telescopic movement control module 5 may be different from the telescopic movement control module 4 in the first embodiment (FIG. 2).

Specifically, the buoyancy-driven kinetic energy generating apparatus of this embodiment includes the first float 3p and the second float 3q. Thus, each end face 21a of the rotor body 21 includes a plurality of outer tracks 23 for respectively guiding the corresponding float 3. Furthermore, the outer tracks 23 on the same end face 21a are connected by a ring 24 to reinforce the structural strength of the outer tracks 23, reducing swaying or wobbling of the outer tracks 23 to enhance the stability of the telescopic movement of each float 3.

In the embodiment shown in FIGS. 15 and 16, the buoyancy-driven kinetic energy generating apparatus includes a connecting module 35 connecting the housing 31 of the first float 3p to the housing 31 of the second float 3q. Thus, the first float 3p and the second float 3q can synchronously move in the radial direction relative to the rotor body 21. In this embodiment, the guiding member 33 of each of the first float 3p and the second float 3q is substantially T-shaped. The connecting module 35 includes two fixing member 351 and a connecting rod 352. The fixing members 351 are respectively mounted to the inner side of the first float 3p and the inner side of the second float 3q. Two ends of the connecting rod 352 are mounted to the fixing members 351. Preferably, the connecting rod 352 is connected to centers of the fixing members 351 to uniformly actuate the housings 31.

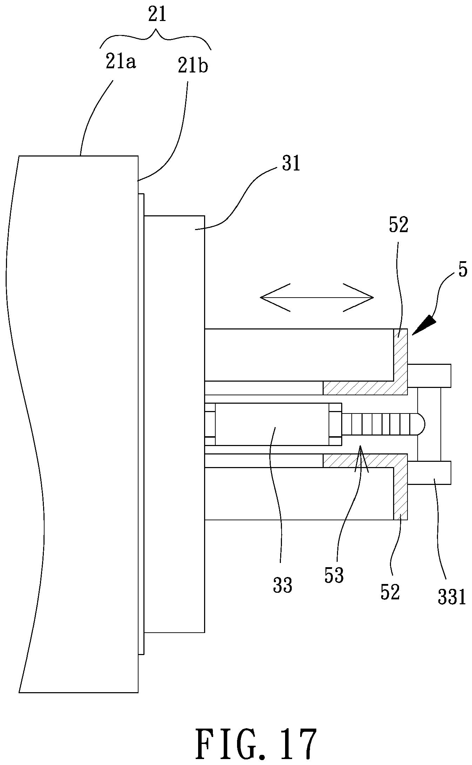

With reference to FIGS. 16 and 17, the telescopic movement control module 5 faces a portion of the peripheral face 21b of the rotor body 21. As a non-restrictive example, the telescopic movement control module 5 in this embodiment is substantially aligned with a lower portion of the rotor body 21. The telescopic movement control module 5 includes a bracket 51 and two rails 52. The bracket 51 is mounted to the inner wall of the tank 11. Each rail 52 is substantially arcuate. The rails 52 are mounted to the bracket 51 and are parallel to and spaced from each other to form a passage 53 therebetween. By such an arrangement, when the rotor body 21 rotates to make the guiding member 33 of the first float 3p or the second float 3q contact the rails 52, the substantially T-shaped guiding member 33 can extend through the passage 53, and the roller 331 of the guiding member 33 abutting outer surfaces of the rails 52. The rails 52 control the movement of the guiding member 33 to control the first float 3p or the second float 3q to telescope relative to the peripheral face 21b of the rotor body 21 and to make the first float 3p and the second float 3q synchronously move relative to the rotor body 21 in the radial direction.

With reference to FIGS. 7 and 16, when the buoyancy-driven kinetic energy generating apparatus operates, each of the first float 3p and the second float 3q rotates jointly with the rotor body 21 a turn while completing a telescopic cycle relative to the peripheral face 21b of the rotor body 21. Each telescopic cycle includes a float hidden stroke, a float gradual extending stroke, a float completely exposed stroke, and a float gradual retracting stroke. In this embodiment, the float hidden stroke, the float gradual extending stroke, the float completely exposed stroke, and the float gradual retracting stroke of each of the first float 3p and the second float 3q are preferably spaced from each other in a circumferential direction at regular intervals. The float hidden stroke of the first float 3p corresponds to the float completely exposed stroke of the second float 3q. The float gradual extending stroke of the first float 3p corresponds to the float gradual retracting stroke of the second float 3q. The float completely exposed stroke of the first float 3p corresponds to the float hidden stroke of the second float 3q. The float gradual retracting stroke of the first float 3p corresponds to the float gradual extending stroke of the second float 3q.

Furthermore, each rail 52 includes a start end 52a and a terminal end 52b. The extending direction from the start end 52a to the terminal end 52b of each rail 52 is substantially the rotating direction of the rotor 2. Thus, the first float 3p and the second float 3q can enter the rails 52 via the start ends 52a of the rails 52 and can leave the rails 52 via the terminal ends 52b of the rails 52. Each rail 52 includes a movement control section 521 and a maintaining section 522 following the movement control section 521 in the rotating direction of the rotor 2. The spacing between the outer surface of the movement control section 521 to the rotating center of the rotor body 21 increases from a point of the movement control section 521 toward a connection between the movement control section 521 and the maintaining section 522. The outer surface of the maintaining section 522 and the peripheral face 21b of the rotor body 21 are concentric.

A telescopic movement end line L1' passes through the connection between the movement control section 521 and the maintaining section 522 and the rotating center of the rotor body 21 and is preferably at an angle of 45 ° to a horizontal line. A telescopic movement start line L2' passes through the rotating center of the rotor body 21 and is orthogonal to the telescopic movement end line L1'. The telescopic movement end line L1' and the telescopic movement start line L2' divide the space of the tank 11 into four sections (starting from the telescopic movement end line L1' in the rotating direction of the rotor 2): a float hidden section Z1, a float gradual extending section Z2, a float completely exposed section Z3, and a float gradual retracting section Z4. Thus, the float hidden section Z1 is opposite to the float completely exposed section Z3 in a diametric direction of the rotor body 21, and the float gradual extending section Z2 is opposite to the float gradual retracting section Z4 in a diametric direction of the rotor body 21. Each of the first float 3p and the second float 3q can undergo the float hidden stroke, the float gradual extending stroke, the float completely exposed stroke, and the float gradual retracting stroke.

Furthermore, the liquid contained in the tank 11 preferably has a level F at the upper portion of the rotor body 21 where the telescopic movement end line L1' passes the rotor body 21 (see point C' in FIG. 16), such that the float gradual extending section Z2 is located below the level F and the float gradual retracting section Z4 is located above the level F. This assures that when the first float 3p or the second float 3q enters the float gradual retracting section Z4, the first float 3p or the second float 3q can smoothly retract into the interior of the rotor body 21 in the air without resistance caused by the liquid and can enter the liquid at a state having the maximal retraction magnitude. The resistance to the rotation of the rotor body 21 at the moment the first float 3p or the second float 3q entering the liquid and affected by the liquid resistance can be reduced, enhancing the overall kinetic energy generating efficiency of the buoyancy-driven kinetic energy generating apparatus.

With reference to FIG. 16, in the buoyancy-driven kinetic energy generating apparatus of the second embodiment according to the present invention, when the tank 11 has not been filled with a sufficient amount of liquid, the first float 3p is located in the float completely exposed section Z3, and the roller 331 keeps contacting the maintaining sections 522 of the rails 52 such that the extension magnitude of the first float 3p is maximal. At the same time, the second float 3q is in the float hidden section Z1 and has the maximal retraction magnitude. When the tank 11 is filled with a sufficient amount of liquid, the rotor body 21 can create a relatively great pre-buoyancy in the liquid. Furthermore, due to the space in the housing 31 of the first float 3p, the first float 3p in the float completely exposed section Z3 additionally and locally increases the buoyancy of the rotor body 21 to imbalance the rotor body 21 such that the rotor body 21 starts to rotate. Thus, the guiding member 33 of the first float 3p can keep contacting the outer surfaces of the maintaining sections 522 of the rails 52 in the float completely exposed section Z3 until the guiding member 33 disengages from the terminal ends 52b of the rails 52.

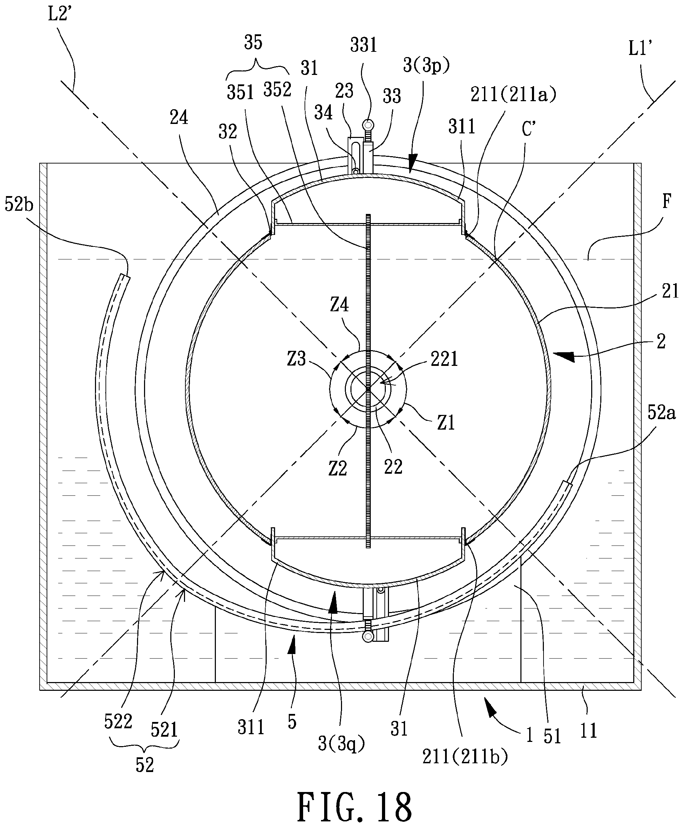

With reference to FIG. 18, after the first float 3p disengages from the maintaining sections 522 of the rails 52, the roller 331 of the guiding member 33 of the second float 3q contacts the outer surfaces of the movement control sections 521 of the rails 52 (i.e., the second float 3q is aligned with the telescopic movement start line L2'). The rails 52 start to pull the second float 3q into the float gradually extending stroke, and the second float 3q gradually extends out of the interior of the rotor body 21. Thus, the first float 3p and the second float 3q move in the diametrical direction relative to the rotor body 21, and the first float 3p is synchronously moved into the float gradual retracting stroke and gradually retracts into the interior of the rotor body 21.

At this time, the extension magnitude of the second float 3q increases gradually in the float gradual extending section Z2. Thus, the buoyancy of the buoyancy-driven kinetic energy generating apparatus is gradually increased to take over assistance in rotation of the rotor body 21. Likewise, the first float 3p can emerge from the liquid to a position above the level F after passing through the telescopic movement start line L2'. Thus, the first float 3p can move synchronously with the second float 3q without resistance caused by the liquid, gradually retracting the housing 31 of the first float 3p into the interior of the rotor body 21.

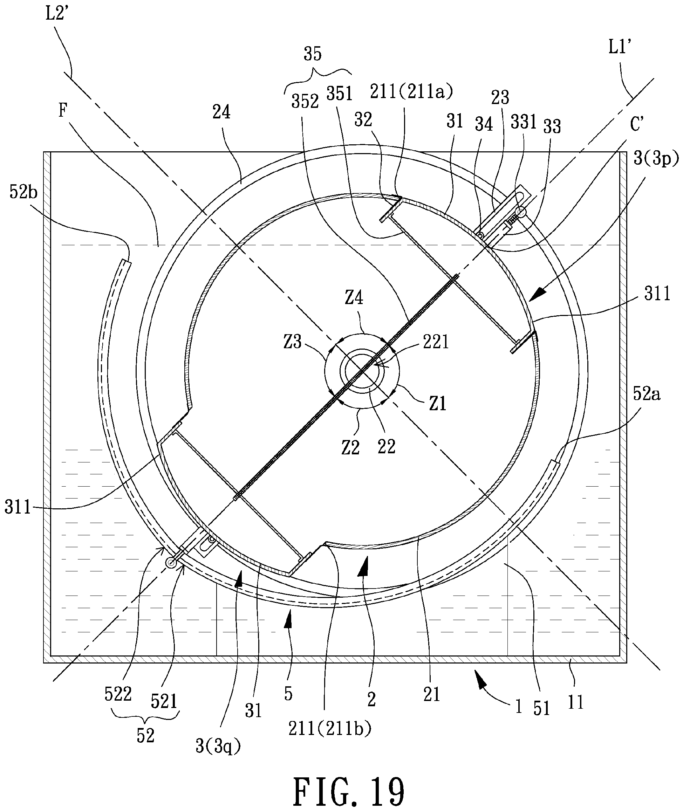

With reference to FIG. 19, when the second float 3q is aligned with the maintaining sections 522 of the rails 52 (i.e., the second float 3q is aligned with the telescopic movement end line L1'), the second float 3q is pulled and has the maximal extension magnitude. Thus, the rotor body 21 is driven to rotate under the maximal buoyancy. At the same time, the first float 3p above the level F is actuated to a state having the maximal retraction magnitude, such that the first float 3p can reenter the liquid and the float hidden section Z1 with the minimal resistance.

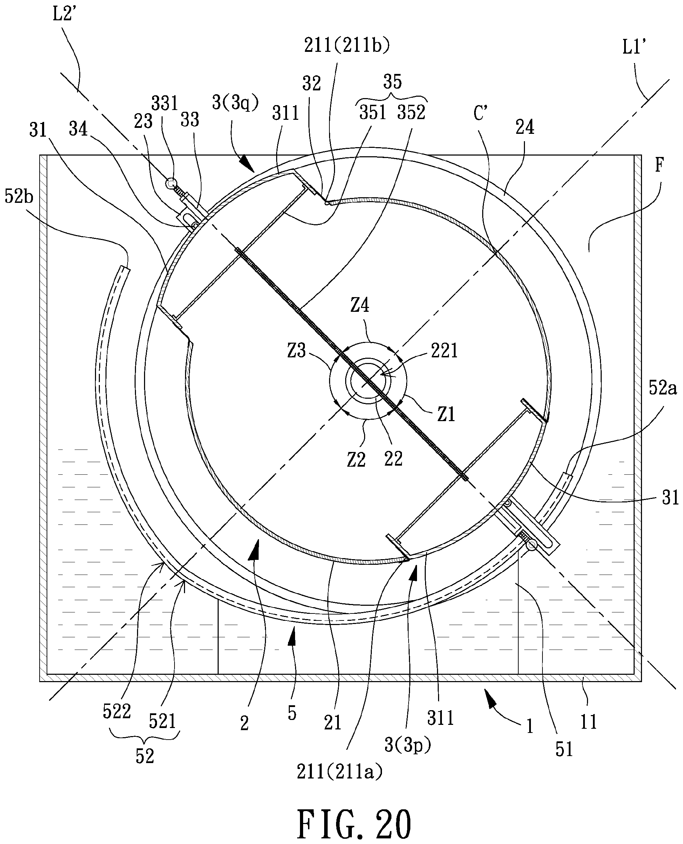

While the second float 3q is aligned with the maintaining sections 522 of the rails 52, the rails 52 stop pulling the second float 3q, and the maintaining sections 522 of the rails 52 keep the second float 3q in the state having the maximal extension magnitude until the second float 3q disengages from the terminal ends 52b of the rails 52 (see FIG. 20). On the other hand, the first float 3p reentering the liquid will rotate jointly with the rotor body 21 to a position aligned with the rails 52, and the guiding member 33 of the first float 3p contact the outer surfaces of the movement control sections 521 of the rails 52 such that the first float 3p gradually extends out of the interior of the rotor body 21 to its maximal extension magnitude (see FIG. 16), completing a telescopic cycle.

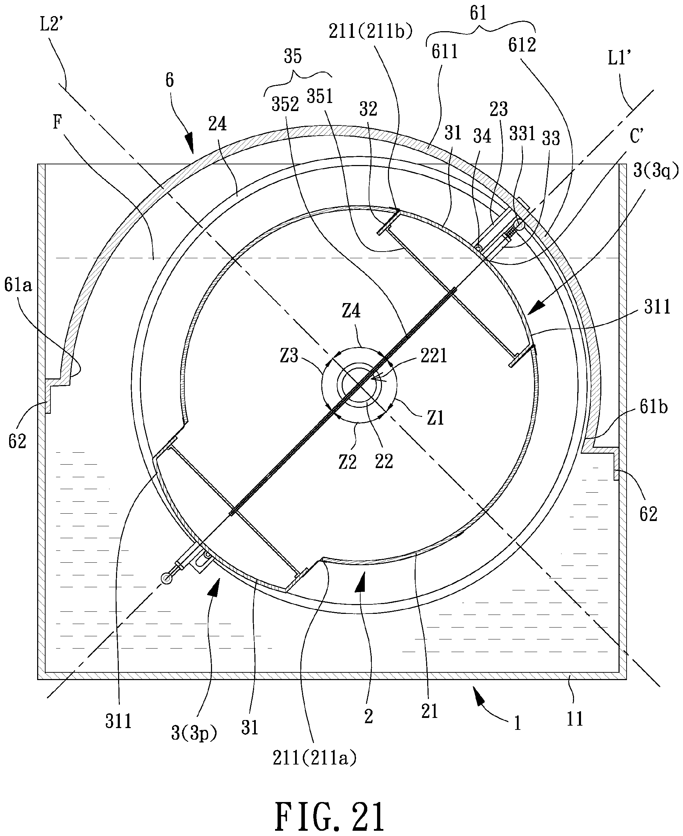

FIG. 21 shows a buoyancy-driven kinetic energy generating apparatus of a third embodiment according to the present invention. The third embodiment is substantially the same as the second embodiment except that the telescopic movement control module is different in shape and location. Namely, in contrast to the second embodiment in which the first float 3p and the second float 3q are actuated by pulling, the floats 3p and 3q in this embodiment are actuated by pressing.

Specifically, the telescopic movement control module 6 of this embodiment is mounted in the tank 11. As a non-restrictive example, the telescopic movement control module 6 is in the upper portion of the rotor body 21. The telescopic movement control module 6 includes a pressing board 61 and a plurality of fasteners 62. The pressing board 61 is a substantially arcuate board and includes a start end 61a and a terminal end 61b. The extending direction of the pressing board 61 from the start end 61a to the terminal end 61b is the rotating direction of the rotor 2, such that each of the first float 3p and the second float 3q enters the range of the pressing board 61 via the start end 61a and leaves the range of the pressing board 61 via the terminal end 61b. The pressing board 61 includes a movement control section 611 and a maintaining section 612 following the movement control section 611 in the rotating direction of the rotor 2. A spacing between the movement control section 611 and the rotating center of the rotor 2 decreases from a point of the movement control section 611 toward the maintaining section 612. The inner surface of the maintaining section 612 is concentric to the peripheral face 21b of the rotor body 21.

A telescopic movement end line L1' passes through the connection between the movement control section 611 and the maintaining section 612 and the rotating center of the rotor body 21 and is preferably at an angle of 45 ° to a horizontal line. A telescopic movement start line L2' passes through the rotating center of the rotor body 21 and is orthogonal to the telescopic movement end line L1'. The telescopic movement end line L1' and the telescopic movement start line L2' divide the space of the tank 11 into four sections (starting from the telescopic movement end line L1' in the rotating direction of the rotor 2): a float hidden section Z1, a float gradual extending section Z2, a float completely exposed section Z3, and a float gradual retracting section Z4. The float hidden section Z1 is opposite to the float completely exposed section Z3 in a diametric direction of the rotor body 21. The float gradual extending section Z2 is opposite to the float gradual retracting section Z4 in a diametric direction of the rotor body 21. Each of the first float 3p and the second float 3q can undergo the float hidden stroke, the float gradual extending stroke, the float completely exposed stroke, and the float gradual retracting stroke.

By such an arrangement, in operation of the buoyancy-driven kinetic energy generating apparatus of the third embodiment according to the present invention, the first float 3p and the second float 3q can separately undergo the float hidden stroke, the float gradual extending stroke, the float completely exposed stroke, and the float gradual retracting stroke in the float hidden section Z1, the float gradual extending section Z2, the float completely exposed section Z3, and the float gradual retracting section Z4 (c.f. FIG. 7), providing alternate assistance in rotation of the rotor body 21 to maintain smooth rotation of the rotor body 21.

Based on the structure, when the buoyancy-driven kinetic energy generating apparatus of the third embodiment according to the present invention operates, the first float 3p and the second float 3q can undergo the float hidden stroke, the float gradual extending stroke, the float completely exposed stroke, and the float gradual retracting stroke in the float hidden section Z1, the float gradual extending section Z2, the float completely exposed section Z3, and the float gradual retracting section Z4, respectively. As such, the first float 3p and the second float 3q can alternately provide assistance in rotation of the rotor body 21, maintaining smooth rotation of the rotor body 21. When the roller 331 of the guiding member 33 of the first float 3p (or the second float 3q) contacts the inner surface of the movement control section 611 of the pressing board 61 (i.e., the roller 331 is aligned with the telescopic movement start line L2'), the pressing board 61 starts to push the first float 3p (or the second float 3q) into the float gradually retracting stroke, so that the first float 3p (or the second float 3q) gradually retracts into the interior of the rotor body 21. In this regard, the second float 3q (or the first float 3p) enters the float gradually extending stroke, and gradually extends out of the interior of the rotor body 21 under actuation by the connecting module 35. Thus, the first float 3p and the second float 3q telescope in the radial directions relative to the rotor body 21. The gradually increased buoyancy of the second float 3q (or the first float 3p) alternately assists in rotation of the rotor body 21. When the roller 331 of the guiding member 33 of the first float 3p (or the second float 3q) contacts the inner surface of the maintaining section 612 of the pressing board 61 (i.e., the roller 311 is aligned with the telescopic movement end line L1'), the first float 3p (or the second float 3q) is pressed to the maximal retraction magnitude, and the pressing board 61 stops pressing the first float 3p (or the second float 3q) such that the first float 3p (or the second float 3q) undergoes the float hidden stroke. At the same time, the second float 3q (or the first float 3p) is actuated by the connecting module 35 to the maximal extension magnitude and undergoes the float completely exposed stroke. Thus, the buoyancy-driven kinetic energy generating apparatus of the third embodiment according to the present invention can achieve the same effect of enhancing the kinetic energy generating effect as the first and second embodiments.

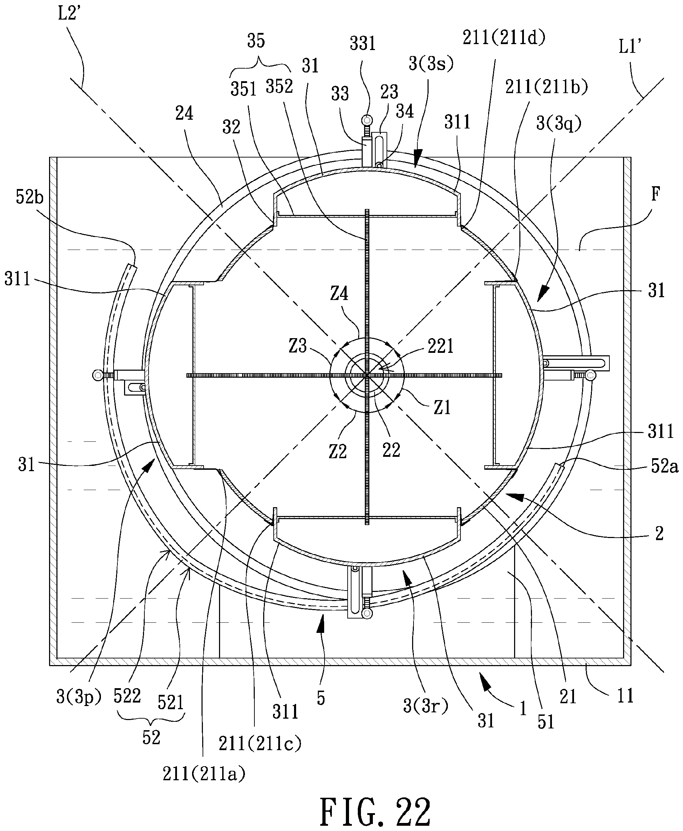

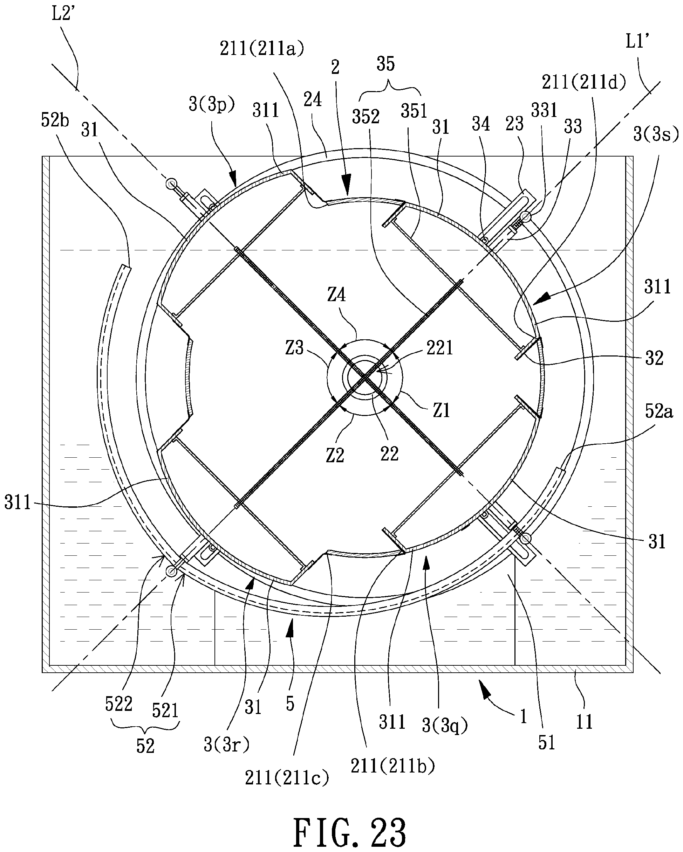

FIGS. 22 and 23 show a buoyancy-driven kinetic energy generating apparatus of a fourth embodiment according to the present invention. The fourth embodiment is substantially the same as the second embodiment except for the number of the floats to further enhance the kinetic energy generating effect.

Specifically, the buoyancy-driven kinetic energy generating apparatus includes four floats 3 in the embodiment shown in FIGS. 22 and 23. The four floats 3 include a first float 3p, a second float 3q, a third float 3r, and a fourth float 3s. The peripheral face 21b further includes a third slot 211c and a fourth slot 211d. As such, the first float 3p, the second float 3q, the third float 3r and the fourth slot 3s are mounted in the first slot 211a, the second slot 211b, the third slot 211c and the fourth slot 211d, respectively. The housing 31 of the first float 3p and the housing 31 of the second float 3q are opposite to each other in a diametric direction of the rotor body 21 and are connected by a connecting module 35, such that the first float 3p and the second float 3q synchronously move relative to the rotor body 21 in the corresponding radial direction. Likewise, the housing 31 of the third float 3r and the housing 31 of the fourth float 3s are opposite to each other in a diametric direction of the rotor body 21 and are connected by another connecting module 35, such that the third float 3r and the fourth float 3s synchronously move relative to the rotor body 21 in the corresponding radial direction. Furthermore, the first float 3p, the second float 3q, the third float 3r, and the fourth float 3s are preferably mounted to the peripheral face 21b of the rotor body 21 and are spaced from each other at regular intervals to further enhance the rotational stability of the rotor body 21.

When the buoyancy-driven kinetic energy generating apparatus of the fourth embodiment according to the present invention operates, if the first float 3p is in a position shown in FIG. 22, the first float 3p is in the float completely exposed section Z3, and the roller 331 of the guiding member 33 of the first float 3p keeps contacting the outer surfaces of the maintaining sections 522 of the rails 52 such that the first float 3p has the maximal extension magnitude to provide the maximal buoyancy to drive the rotor body 21 to rotate. The second float 3q corresponding to the first float 3p is located in the float hidden section Z1 and maintains the state having the maximal retraction magnitude. Thus, first float 3p and the second float 3q will not move temporarily in the corresponding radial direction relative to the rotor body 21. At the same time, the third float 3r is in the float gradual extending section Z2, and the fourth float 3s is in the float gradual retracting section Z4. The roller 331 of the guiding member 33 of the third float 3r contacts the outer surfaces of the movement control sections 521 of the rails 52. The rails 52 provide the third float 3r with a pulling force to gradually increase the extension magnitude of the third float 3r out of the rotor body 21, gradually increasing the buoyancy to assist in rotation of the rotor body 21. Furthermore, the third float 3r and the fourth float 3s move relative to the rotor body 21 in the corresponding radial direction such that the fourth float 3s is actuated to gradually retract into the interior of the rotor body 21 in the float hidden section Z1.

With reference to FIG. 23, after the roller 331 of the guiding member 33 of the first float 3p disengages from the terminal ends 52b of the rails 52, the roller 331 of the guiding member 33 of the corresponding second float 3q immediately contacts the outer surfaces of the movement control sections 521 of the rails 52 (i.e., the second float 3q is aligned with the telescopic movement start line L2'). Thus, the second float 3q is pulled by the rails 52 and undergoes the float gradually extending stroke and gradually extends out of the rotor body 21 to gradually increase the buoyancy assisting in rotation of the rotor body 21. Furthermore, the first float 3p and the second float 3q are about to move relative to the rotor body 21 in the corresponding radial direction for synchronously moving the first float 3p into the float gradually retracting stroke and gradually retracting the first float 3p into the interior of the rotor body 21. On the other hand, while the second float 3q passes through the telescopic movement start line L2', the third float 3r passes through the telescopic movement end line L1' to undergo the float completely exposed stroke such that the third float 3r maintains the maximal extension magnitude in the float completely exposed section Z3 to drive the rotor body 21 to rotate with the maximal buoyancy. The corresponding fourth float 3s undergoes the float hidden stroke and maintains the maximal retraction magnitude in the float hidden section Z1. Thus, the third float 3r and the fourth float 3s do not move temporarily in the corresponding radial direction relative to the rotor body 21.

By such an arrangement, in operation of the buoyancy-driven kinetic energy generating apparatus of the fourth embodiment according to the present invention, the first float 3p, the second float 3q, the third float 3r, and the fourth float 3s can separately undergo the float hidden stroke, the float gradual extending stroke, the float completely exposed stroke, and the float gradual retracting stroke in the float hidden section Z1, the float gradual extending section Z2, the float completely exposed section Z3, and the float gradual retracting section Z4 (c.f. FIG. 7), providing alternate assistance in rotation of the rotor body 21 to maintain smooth rotation of the rotor body 21. Compared to the first, second, and third embodiments, the fourth embodiment further enhances the kinetic energy generating efficiency.

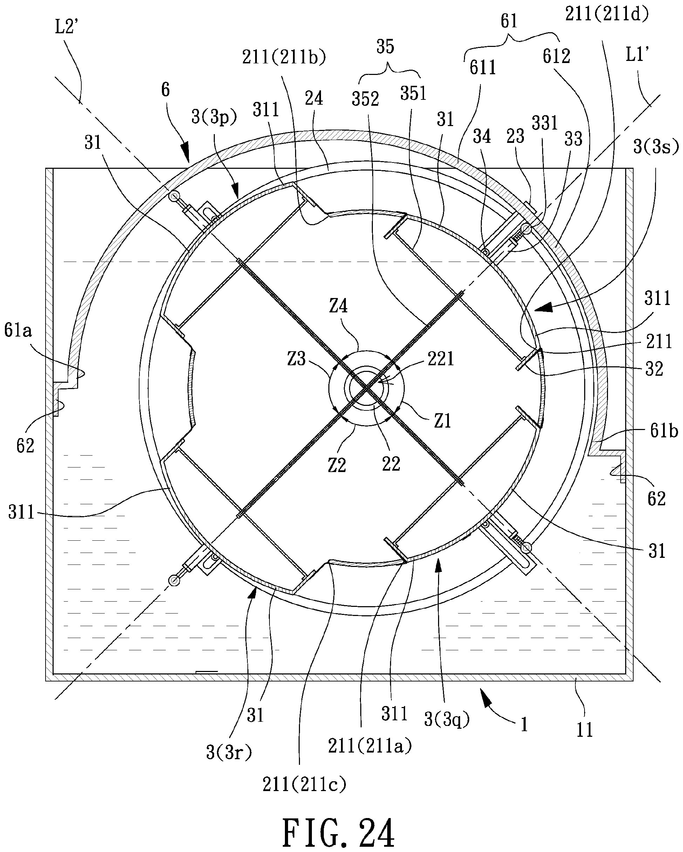

FIG. 24 shows a buoyancy-driven kinetic energy generating apparatus of a fifth embodiment according to the present invention substantially the same as the fourth embodiment. The fifth embodiment is substantially the same as the fourth embodiment except that the telescopic movement control module is different in shape and location. Namely, similar to the third embodiment, the telescopic movement control module of this embodiment actuates the first float 3p and the second float 3q (or third float 3r and the fourth float 3s) by pressing. Thus, the buoyancy-driven kinetic energy generating apparatus of the fifth embodiment according to the present invention can also achieve the same effect of the fourth embodiment in enhancing the kinetic energy generating efficiency. The operational principles of the buoyancy-driven kinetic energy generating apparatus of the fifth embodiment are substantially the same as those mentioned above and are not set forth again to avoid redundancy.

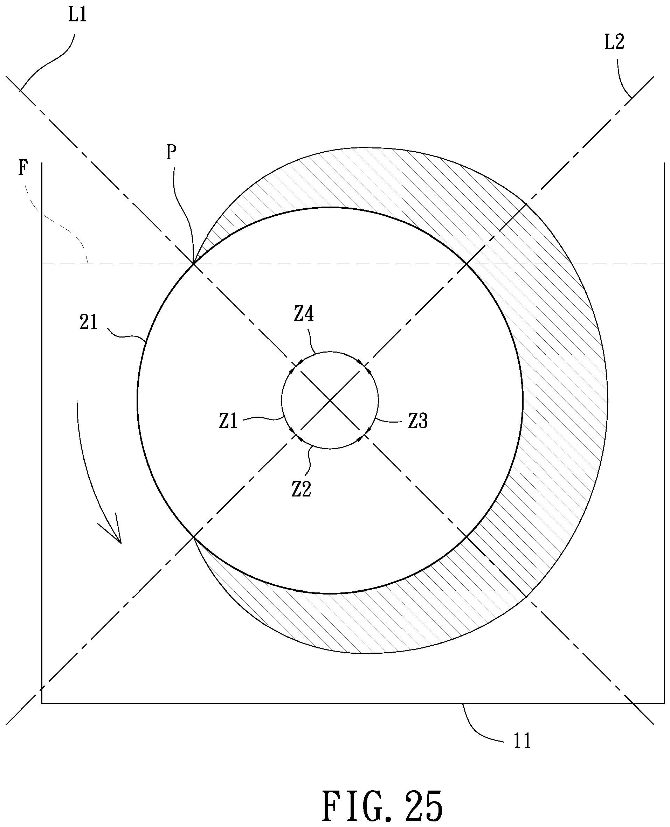

FIG. 25 is a schematic diagram illustrating the extension magnitude of the float 3 when the rotor 2 according to the present invention rotates in a counterclockwise direction. The hatching area in FIG. 25 indicates the extension magnitude of the float 3 in the tank 11. Namely, the rotor body 21 can also rotate in the tank 11 in the counterclockwise direction. When the buoyancy-driven kinetic energy generating apparatus operates, the float 3 completes a telescopic cycle relative to the peripheral face 21b of the rotor body 21 while the float 3 rotates a round together with the rotor body 21. Each telescopic cycle includes four strokes: a float hidden stroke, a float gradual extending stroke, a float completely exposed stroke, and a float gradual retracting stroke. The float 3 maintains its maximal retraction magnitude (i.e., the extension magnitude is minimal) during the float hidden stroke. The extension magnitude of the float 3 increases gradually during the float gradual extending stroke. The float 3 maintains its maximal extension magnitude during the float completely exposed stroke. The extension magnitude of the float 3 decreases gradually during the float gradual retracting stroke, and the float 3 has the maximal retraction magnitude when the float 3 returns to the float hidden stroke.

The number of the floats 3 ranges from 1 to 4 in the embodiments shown. However, the number of the floats 3 can be larger than four and can be adjusted and modified according to needs, which can be appreciated by one having ordinary skill in the art. The present invention is not restricted by the embodiments shown. Furthermore, when the number of the floats 3 is more than one, the floats 3 do not have to be spaced from each other at regular intervals. The spacing between two adjacent floats 3 can be adjusted to control the speed change of the rotor 2. Furthermore, the floats 3 of the buoyancy-driven kinetic energy generating apparatus according to the present invention can telescope on the opposite end faces 21a of the rotor body 21. In another example, the float 3 in the extended state can be flush with the outer surface of the rotor body 21 (the end faces 21a or the peripheral face 21b), and the float 3 in the retracted state can be in a recess in the outer surface of the rotor body 21, which also can imbalance the rotor body 21 and cause rotation of the rotor body 21.

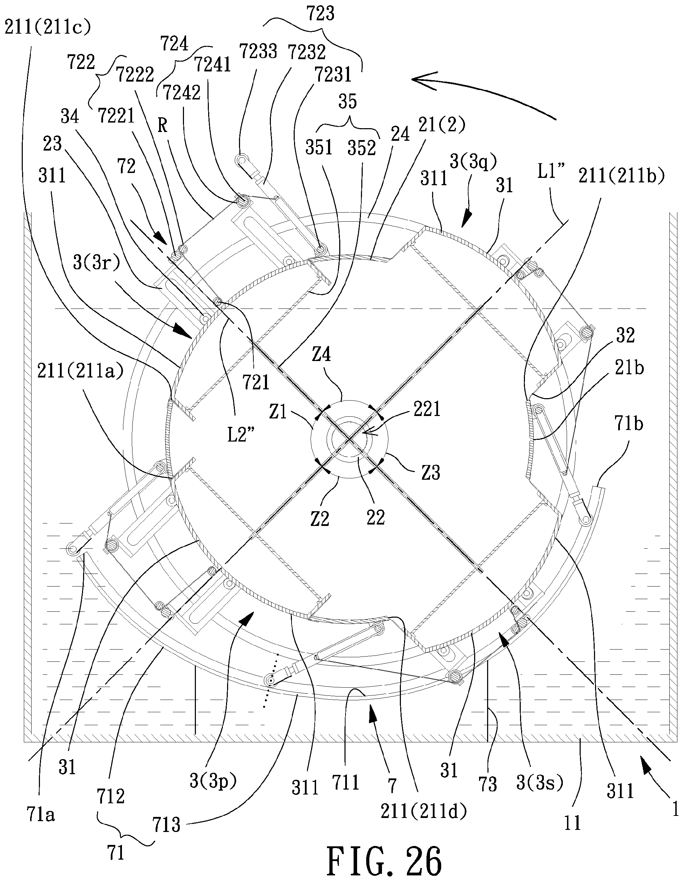

FIG. 26 shows a buoyancy-driven kinetic energy generating apparatus of a sixth embodiment according to the present invention substantially the same as the fourth embodiment. The buoyancy-driven kinetic energy generating apparatus in this embodiment also includes four floats 3 (i.e. the first float 3p, the second float 3q, the third float 3r and the fourth float 3s). When the four floats 3 enter the float gradual extending section Z2 in turn during the rotation, the extension magnitude of each float 3 increases gradually. In the embodiment, the connecting module 35 is also used to provide synchronous movement between the first float 3p and the second float 3q and between the third float 3r and the fourth float 3s. The main differences between the sixth embodiment and the fourth embodiment are the rotating direction of the rotor body 21 (the rotor body 21 rotates in the counterclockwise direction in the embodiment) and the structure of the telescopic movement control module 7 that is used to control the telescopic movement of the floats 3.

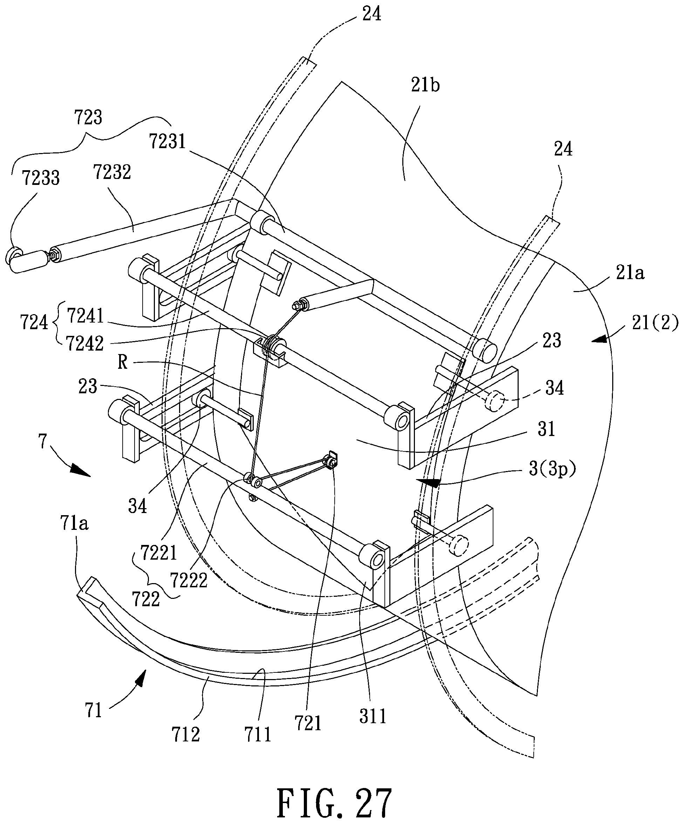

Specifically, referring to FIGS. 26 and 27, the telescopic movement control module 7 includes a guiding track 71 and a plurality of slidewheel units 72. The plurality of slidewheel units 72 has the same quantity as the floats 3. In the embodiment, since four floats 3 are used, therefore four slidewheel units 72 are included. The four slidewheel units 72 are mounted to the rotor body 21 and respectively connected to the four floats 3. The guiding track 71 is mounted in the tank 11. The guiding track 71 guides the four slidewheel units 72 to move, thereby controlling the telescopic movement of a corresponding float 3.

In the embodiment, the telescopic movement control module 7 further includes a bracket 73. The bracket 73 is mounted to the inner wall of the tank 11, and the guiding track 71 is mounted to the bracket 73. As such, the guiding track 71 faces a part of the peripheral face 21b of the rotor body 21. In a preferred and non-limiting case, the guiding track 71 is arranged to face substantially the lower portion of the peripheral face 21b.

The guiding track 71 includes a start end 71a and a terminal end 71b. The guiding track 71 extends from the start end 71a to the terminal end 71b in a direction substantially the same as the rotating direction of the rotor body 21. Each float 3 enters the guiding track 71 at the start end 71a and departs from the guiding track 71 at the terminal end 71b. The guiding track 71 includes an abutment face 711 facing the peripheral face 21b of the rotor body 21 and is substantially in an arcuate form. The guiding track 71 may include a movement control section 712 and a maintaining section 713 connected to the movement control section 712. In the movement control section 712, a spacing between the abutment face 711 and the rotating center of the rotor 2 decreases from the start end 71 a towards a connection end of the movement control section 712 connected to the maintaining section 713. In the maintaining section 713, the abutment face 711 and the peripheral face 21b of the rotor body 21 may be concentric.

A telescopic movement end line L1" is at an angle of 45° to a horizontal line, and passes through the rotating center of the rotor body 21 and the movement control section 712 of the guiding track 71. A telescopic movement start line L2" passes through the rotating center of the rotor body 21 and the maintaining section 713 of the guiding track 71, and is orthogonal to the telescopic movement end line L1". The telescopic movement end line L1" and the telescopic movement start line L2" divide the space of the tank 11 into four sections (starting from the telescopic movement end line L1" in the rotating direction of the rotor 2): a float hidden section Z1, a float gradual extending section Z2, a float completely exposed section Z3, and a float gradual retracting section Z4. The float hidden section Z1 is opposite to the float completely exposed section Z3 in a diametric direction of the rotor body 21. The float gradual extending section Z2 is opposite to the float gradual retracting section Z4 in a diametric direction of the rotor body 21. Each of the floats 3 can undergo the float hidden stroke, the float gradual extending stroke, the float completely exposed stroke, and the float gradual retracting stroke.

Each slidewheel unit 72 includes a first slidewheel unit 721 mounted to the outer surface of the housing 31. Preferably, the first slidewheel unit 721 may be mounted to the center of the outer surface of the housing 31.

Each slidewheel unit 72 further includes a positioning unit 722 and a pivoting unit 723. Both the positioning unit 722 and the pivoting unit 723 are directly or indirectly connected to the rotor body 21 in order to synchronously rotate with the rotor body 21. In the embodiment, the positioning unit 722 is more adjacent to the liquid breaking portion 311 than the pivoting unit 723 is to the liquid breaking portion 311. The positioning unit 722 includes a positioning support 7221 having two ends respectively fixed to two opposing outer tracks 23 of the rotor 2. In this arrangement, the positioning support 7221 can stretch over the peripheral face 21b of the rotor body 21. The positioning support 7221 can also connect to the free ends of the two outer tracks 23 to prevent the positioning support 7221 from hindering the telescopic movement of the float 3.

The positioning unit 722 further includes a second slidewheel unit 7222 mounted to the positioning support 7221. The second slidewheel unit 7222 has an axis that may be parallel to an axis of the first slidewheel unit 721. A connecting rope **R** (such as a steel rope) has an end fixed to the housing 31 or the positioning support 7221 and wound around the first slidewheel unit 721 and the second slidewheel unit 7222. In this arrangement, the first slidewheel unit 721 forms a "moving slidewheel" with respect to the positioning unit 722.

The pivoting unit 723 includes a pivoting frame 7231 pivotally connected to the peripheral face 21b of the rotor body 21. The pivoting frame 7231 pivots about an axis that may be parallel to the axis of the first slidewheel unit 721. The connecting rope **R** has another end that may be fixed to the pivoting frame 7231. The connecting rope **R** is preferably nonelastic to maintain the connecting rope **R** in a constant length. The first slidewheel unit 721, the second slidewheel unit 7222 and two end of the connecting rope **R** can be located on the same plane, permitting the connecting rope **R** to connect between the first slidewheel unit 721 and the second slidewheel unit 7222 in a 2-D manner. Thus, generation of the branch force during the synchronous movement can be reduced. Particularly, the connecting rope **R** may distribute along a plane orthogonal to the axis of the first slidewheel unit 721, attaining improved dragging effect of the connecting rope **R.**

The pivoting unit 723 further includes a rocking arm 7232 and a rolling member 7233. The rocking arm 7232 is fixed to the pivoting frame 7231. The rocking arm 7232 may extend in a direction parallel to the end face 21a of the rotor body 21. The length of the rocking arm 7232 is preferably adjustable. The rolling member 7233 is rotatably mounted to the rocking arm 7232 (preferably mounted to the free end of the rocking arm 7232). Therefore, when the rolling member 7233 keeps in contact with the guiding track 71, the rolling member 7233 can smoothly move along the abutment face 711 of the guiding track 71, driving the rocking arm 7232 and the pivoting frame 7231 to pivot synchronously.

Besides, each slidewheel unit 72 may include an auxiliary positioning unit 724 which is also directly or indirectly connected to the rotor body 21 to rotate synchronously with the rotor body 21. The auxiliary positioning unit 724 is also positioned between the positioning unit 722 and the pivoting unit 723. In the embodiment, the auxiliary positioning unit 724 includes an auxiliary positioning support 7241 having two ends respectively fixed to another two opposing outer tracks 23 of the rotor 2. In this arrangement, the auxiliary positioning support 7241 can also stretch over the peripheral face 21b of the rotor body 21. Also, the auxiliary positioning support 7241 can connect to the free ends of said the other two outer tracks 23 to prevent the auxiliary positioning support 7241 from hindering the telescopic movement of the float 3. Moreover, the auxiliary positioning unit 724 includes a rotatable tension wheel 7242 whose axis may be parallel to the axis of the first slidewheel unit 721. The connecting rope **R** is wound around the first slidewheel unit 721, the second slidewheel unit 7222 and the tension wheel 7242, and is finally fixed to the pivoting frame 7231. The arrangement of the pivoting frame 7231 can maintain the connecting rope **R** in a tensed state to prevent the connecting rope **R** from hindering the float 3 when the float 3 is extending.

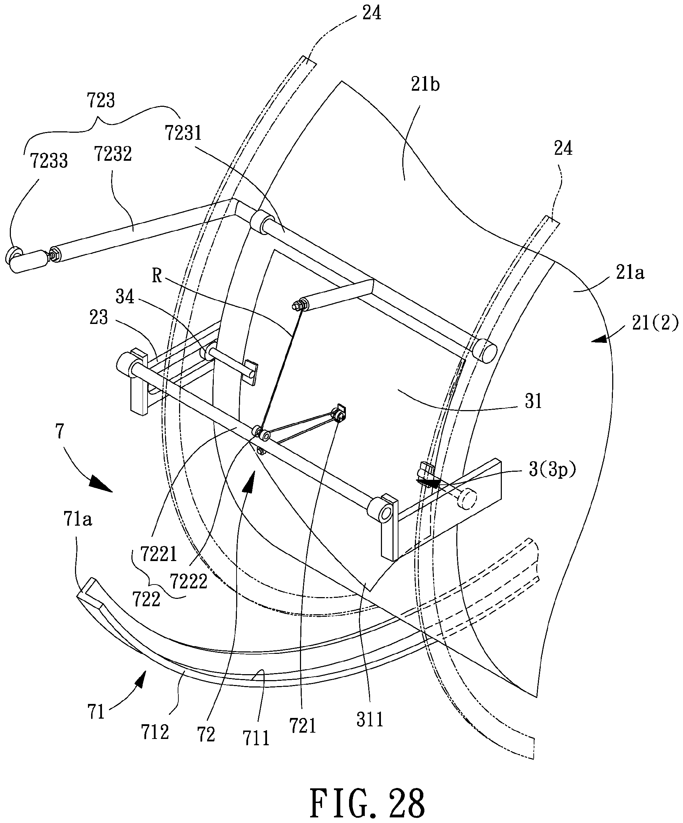

Referring to FIG. 28, in another embodiment, if it can be ensured that the float 3 is not hindered by the connecting rope **R** when the float 3 is extending, the auxiliary positioning unit 724 (shown in FIG. 27) can be omitted to simplify the structural complexity of the buoyancy-driven kinetic energy generating apparatus.

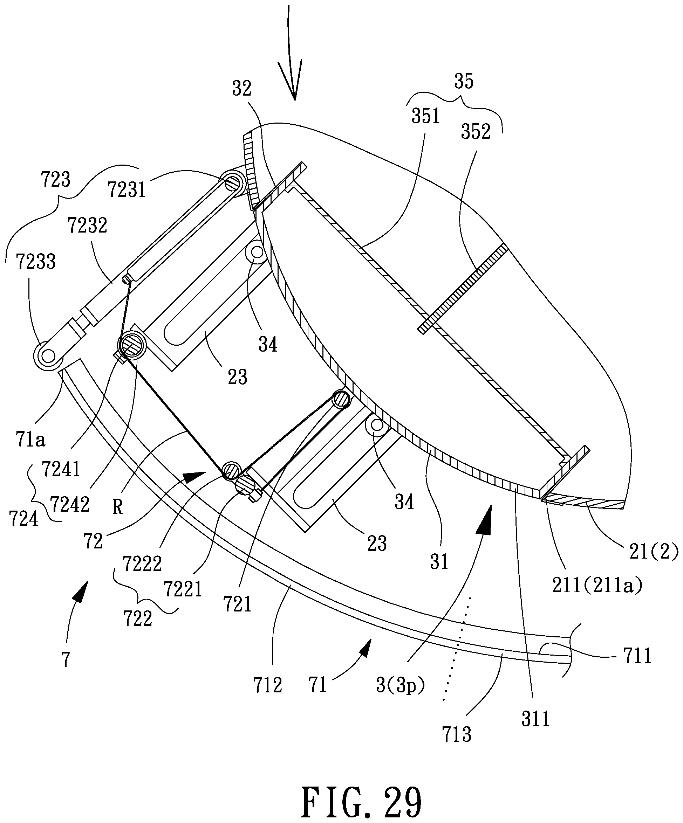

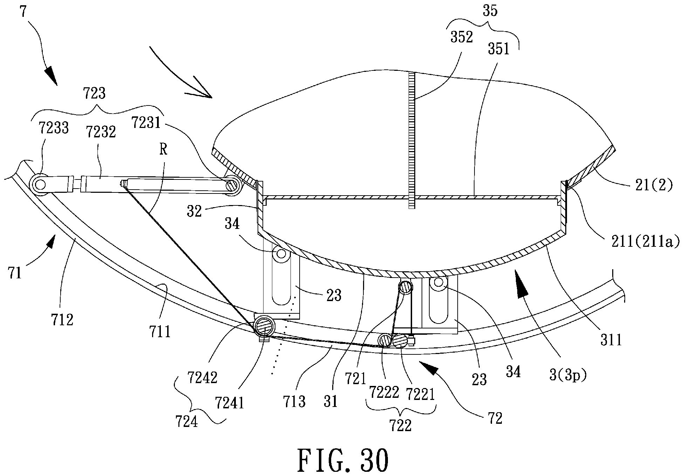

Referring to FIGS. 29 and 30, during the rotation of the rotor body 21, when the rocking arm 7232 of the pivoting unit 723 of a corresponding float 3 makes contact with the guiding track 71 at the start end 71a, the rocking arm 7232 can drive the pivoting frame 7231 to rotate. As a result, the rolling member 7233 abuts with and rolls upon the abutment face 711 of the guiding track 71. As the rotor body 21 continues to rotate, when the rolling member 7233 is in the movement control section 712, the dragged rocking arm 7232 can constantly pivot the pivoting frame 7231 relative to the rotor body 21. Thus, the connecting rope **R** can be pulled (see the change from FIG. 29 to FIG. 30) to gradually increase the length of the connecting rope **R** between the positioning unit 722 and the pivoting unit 723. This gradually reduces the length of the connecting rope **R** between the positioning unit 722 and the first slidewheel unit 721. As a result, the float 3 (such as float 3p) can be gradually pulled outwards while the opposing float 3 (such as float 3q) is gradually retracted to the rotor body 21 at the same time.

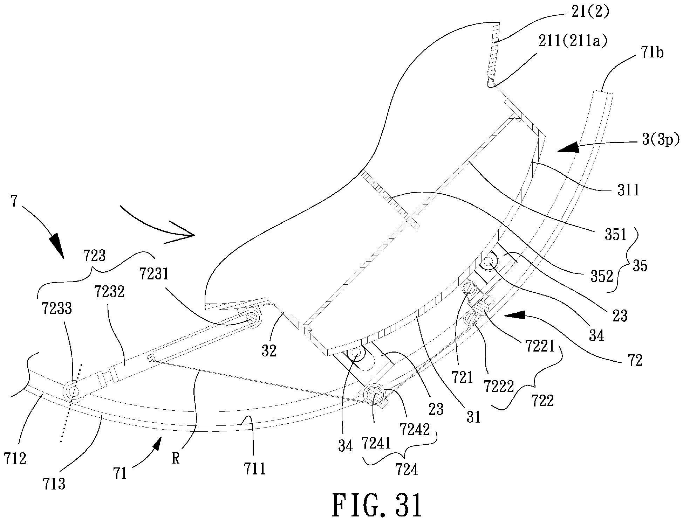

Referring to FIG. 31, when the rolling member 7233 reaches the maintaining section 713 of the guiding track 71, the dragged rocking arm 7232 can stop pivoting the pivoting frame 7231. Thus, pulling of the connecting rope **R** is stopped. As such, the float 3 can remain in a state having the maximal extension magnitude without the telescopic movement relative to the rotor body 21.

Referring to FIGS. 26 and 30, it is noted that since the first slidewheel unit 721 forms a "moving slidewheel" with respect to the positioning unit 722, the connecting rope **R** requires significantly less effort to pull the float 3. In addition, since the rocking arm 7232 of the pivoting unit 723 can provide the pulling force with a larger arm of force, the connecting rope **R** requires even a less effort to pull the float 3. Thus, the buoyancy-driven kinetic energy generating apparatus in the embodiment consumes less energy during the operation, providing a smooth operation of the buoyancy-driven kinetic energy generating apparatus and enhancing the efficiency in generating the kinetic energy.

Furthermore, consider that the connecting rope **R** pulls the first slidewheel unit 721 with a force. In this regard, only the radial component of the force in the radial direction of the rotor body 21 is effective in pulling the float 3. Therefore, in this embodiment, the second slidewheel unit 7222 of the positioning unit 722 is arranged to be diametrically opposing to the first slidewheel unit 721, such that a majority of the pulling force of the connecting rope **R** can be effective in pulling the float 3. Thus, smooth pulling operation of the float 3 can be attained.

Although the buoyancy-driven kinetic energy generating apparatus of the sixth embodiment according to the present invention is designed with the structure for counterclockwise rotation, a mirror structure of the illustrated structure can be used for clockwise rotation of the buoyancy-driven kinetic energy generating apparatus, as it can be readily appreciated by the skilled person in the art. Also, the structure of the buoyancy-driven kinetic energy generating apparatus can be modified according to the user's requirement, and therefore is not limited to the drawing.

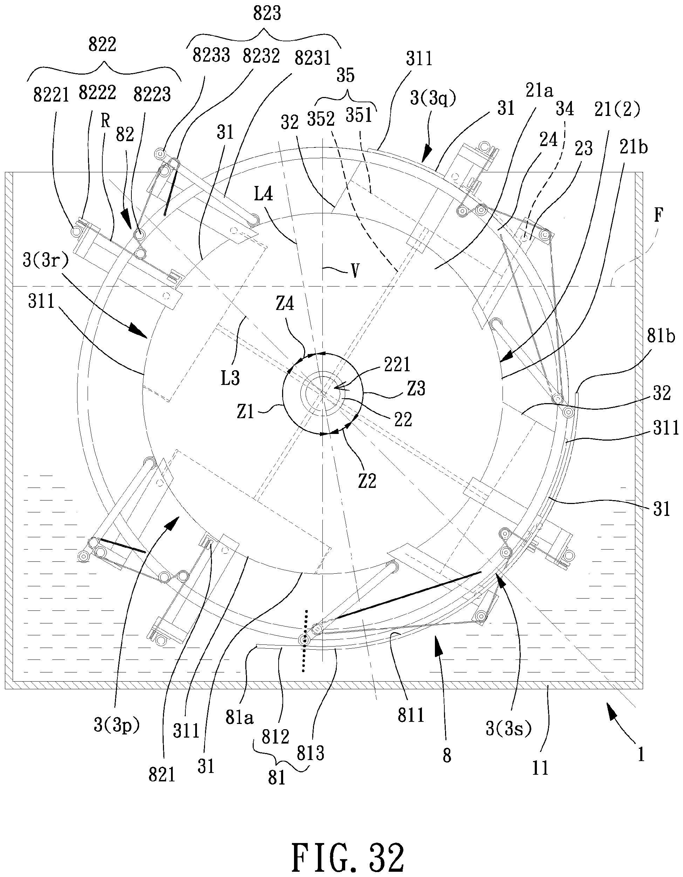

FIG. 32 shows a buoyancy-driven kinetic energy generating apparatus of a seventh embodiment according to the present invention. Similar to the sixth embodiment, the buoyancy-driven kinetic energy generating apparatus in this embodiment also uses a telescopic movement control module 8 which drives the floats 3 to move telescopically via a plurality of slidewheel units.

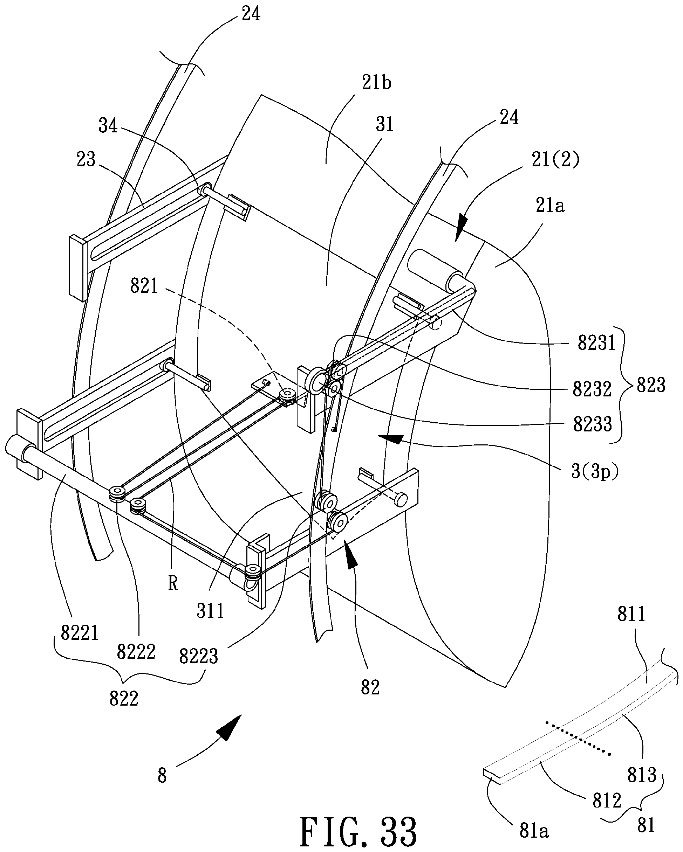

Specifically, referring to FIGS. 32 and 33, the telescopic movement control module 8 includes a guiding track 81 and a plurality of slidewheel units 82. The plurality of slidewheel units 82 has the same quantity as the floats 3. In the embodiment, since four floats 3 are used, therefore four slidewheel units 82 are included. The four slidewheel units 82 are mounted to the rotor body 21 and connected to the four floats 3, respectively. The guiding track 81 is mounted in the tank 11. The guiding track 81 actuates the four slidewheel units 82 to control the telescopic movement of the floats 3.

In the embodiment, the guiding track 81 can be mounted to the support 111 of the tank 11 (see FIG. 2) such that the guiding track 81 faces a part of the peripheral face 21b of the rotor body 21. In another option, similar to the sixth embodiment, the tank 11 may receive a bracket mounted to the guiding track 81. The invention is not limited to either option.

The guiding track 81 includes a start end 81a and a terminal end 81b. The guiding track 81 extends from the start end 81a to the terminal end 81b in a direction substantially the same as the rotating direction of the rotor body 21. Each float 3 can enter the guiding track 81 at the start end 81a and depart from the guiding track 81 at the terminal end 81b. The guiding track 81 includes an abutment face 811 facing the peripheral face 21b of the rotor body 21 and is substantially in an arcuate form. The guiding track 81 may include a movement control section 812 and a maintaining section 813 connected to the movement control section 812. In the movement control section 812, a spacing between the abutment face 811 and the rotating center of the rotor 2 decreases from the start end 81a towards a connection end of the movement control section 812 connected to the maintaining section 813. In the maintaining section 813, the abutment face 811 and the peripheral face 21b of the rotor body 21 may be concentric.

A telescopic movement end line L3 is at an angle of 45° to a horizontal line, and passes through the rotating center of the rotor body 21 and the maintaining section 813 of the guiding track 81. A telescopic movement start line L4 passes through the rotating center of the rotor body 21 and the maintaining section 813 of the guiding track 81. The telescopic movement start line L4 may be a vertical line **V** orthogonal to the horizontal line. Alternatively, the telescopic movement start line L4 may be at an angle of less than 10° to the vertical line **V.** Thus, each float 3 passes through the vertical line **V** and the telescopic movement start line L4 in sequence according to the rotating direction. The telescopic movement end line L3 and the telescopic movement start line L4 divide the space of the tank 11 into four sections (starting from the telescopic movement end line L3 in the rotating direction of the rotor 2): a float hidden section Z1, a float gradual extending section Z2, a float completely exposed section Z3, and a float gradual retracting section Z4. The float hidden section Z1 is opposite to the float completely exposed section Z3 in a diametric direction of the rotor body 21. The float gradual extending section Z2 is opposite to the float gradual retracting section Z4 in a diametric direction of the rotor body 21. Each of the floats 3 can undergo the float hidden stroke, the float gradual extending stroke, the float completely exposed stroke, and the float gradual retracting stroke.

Each slidewheel unit 82 includes a first slidewheel unit 821 mounted to the outer surface of the housing 31. Preferably, the first slidewheel unit 821 may be mounted to the center of the outer surface of the housing 31.

Each slidewheel unit 82 includes a first slidewheel unit 821 mounted to the outer face of the housing 31 of a corresponding float 3. The first slidewheel unit 821 is preferably mounted to the center of the outer face of the housing 31.

Each slidewheel unit 82 further includes a positioning unit 822 and a pivoting unit 823. Both the positioning unit 822 and the pivoting unit 823 are directly or indirectly connected to the rotor body 21 for synchronous rotation with the rotor body 21. In the embodiment, the positioning unit 822 is more adjacent to the liquid breaking portion 311 than the pivoting unit 823 is to the liquid breaking portion 311. The positioning unit 822 includes a positioning support 8221 and a second slidewheel unit 8222. The positioning support 8221 includes two ends respectively fixed to two opposing outer tracks 23 of the rotor 2. In this arrangement, the positioning support 8221 can stretch over the peripheral face 21b of the rotor body 21. The positioning support 8221 can also connect to the free ends of the two outer tracks 23 to prevent the positioning support 8221 from hindering the telescopic movement of the float 3.

The second slidewheel unit 8222 is mounted to the positioning support 8221. The second slidewheel unit 8222 has an axis that may be parallel to an axis of the first slidewheel unit 821. The second slidewheel unit 8222 may be opposing to the first slidewheel unit 821 in a radial direction of the rotor body 21. A connecting rope **R** (such as a steel rope) has an end fixed to the housing 31 or the positioning support 8221 and wound through the first slidewheel unit 821 and the second slidewheel unit 8222. In this arrangement, the first slidewheel unit 821 forms a "moving slidewheel" with respect to the positioning unit 822. The connecting rope **R** is preferably nonelastic to maintain the connecting rope **R** in a constant length. Furthermore, in the embodiment, the first slidewheel unit 821 or the second slidewheel unit 8222 can include two or more slidewheels to enhance the mechanical performance of the slidewheel units 82.

The positioning unit 822 may further include a third slidewheel unit 8223. The third slidewheel unit 8223 may be mounted to the outer track 23 or the ring 24 of the rotor 2. In this regard, the connecting rope **R** can be wound around the third slidewheel unit 8223 and then diverted to the lateral side of the float 3.

The pivoting unit 823 includes a rocking arm 8231, a fourth slidewheel unit 8232 and a rolling member 8233. The rocking arm 8231 is pivotally connected to the peripheral face 21b of the rotor body 21. The rocking arm 8231 pivots about an axis that may be parallel to the axis of the rotor body 21. The rocking arm 8231 may extend in a direction parallel to the end face 21a of the rotor body 21. The fourth slidewheel unit 8232 and the rolling member 8233 are mounted to the rocking arm 8231. After the connecting rope **R** passes through the third slidewheel unit 8223, the connecting rope **R** can be wound around the fourth slidewheel unit 8232, and one end of the connecting rope **R** can be fixed to the ring 24. The rolling member 8233 is rotatably mounted to the rocking arm 8231 (preferably to the free end of the rocking arm 8231). Therefore, when the rolling member 8233 keeps in contact with the guiding track 81, the rolling member 8233 can smoothly move along the abutment face 811 of the guiding track 81, driving the rocking arm 8231 to pivot.

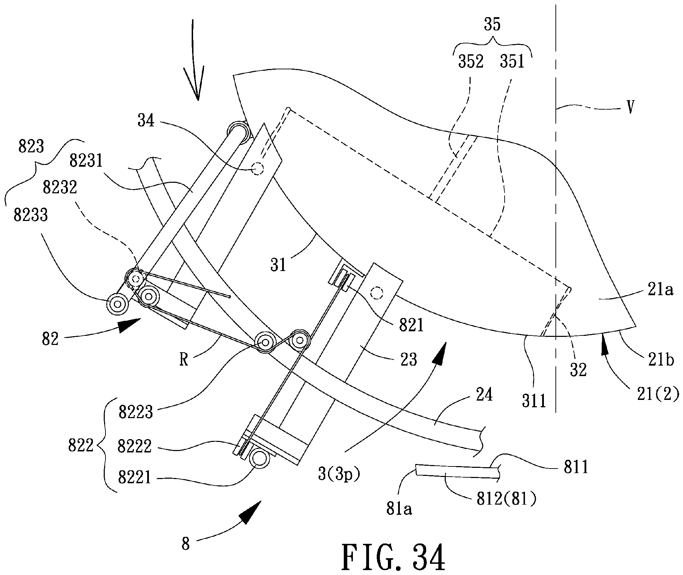

Referring to FIG. 34, during the rotation of the rotor body 21, the float 3 that undergoes the float hidden stroke can maintain in a state having the maximal retraction magnitude (i.e., the extension magnitude is minimal) before the rocking arm 8231 of the corresponding pivoting unit 823 makes contact with the start end 81a of the guiding track 81.

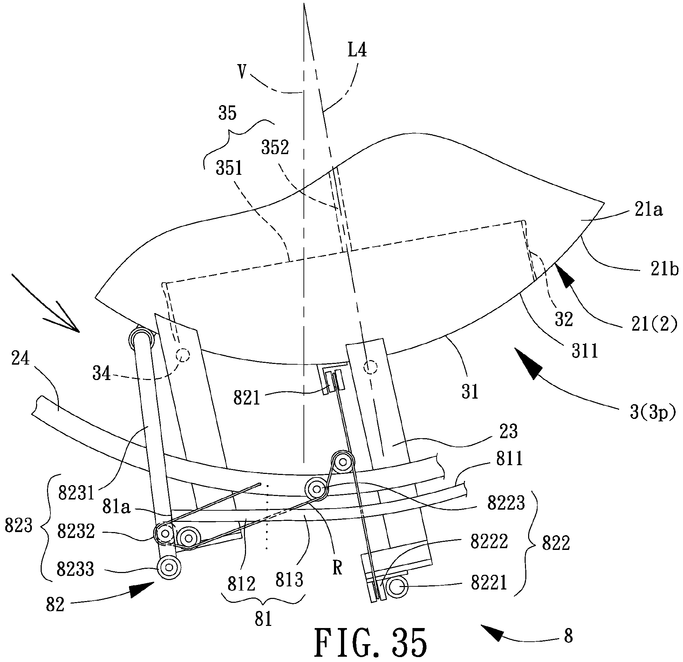

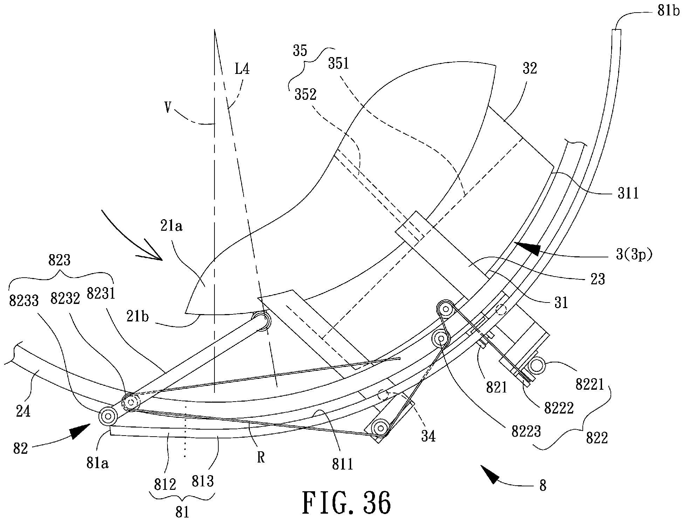

Referring to FIGS. 35 and 36, as the rotor body 21 continues to rotate, the rocking arm 8231 can be pushed by the guiding track 81 to pivot when the rocking arm 8231 makes contact with the start end 81 a of the guiding track 81. At this time, the fourth slidewheel unit 8232 pulls the connecting rope **R** to gradually increase the length of the connecting rope **R** between the positioning unit 822 and the pivoting unit 823. This gradually reduces the length of the connecting rope **R** between the positioning unit 822 and the first slidewheel unit 821. As a result, the float 3 can be gradually pulled outwards (the float gradually extending stroke) while the opposing float 3 is gradually retracted to the rotor body 21 (the float gradual retracting stroke). When the pivoting angle of the rocking arm 8231 is larger than a predetermined angle, the rolling member 8233 of the pivoting unit 823 can enter the movement control section 812 of the guiding track 81, and roll upon the abutment face 811 of the guiding track 81. As such, the rocking arm 8231 can continue to pivot, thereby continuously pulling the float 3 outwards.

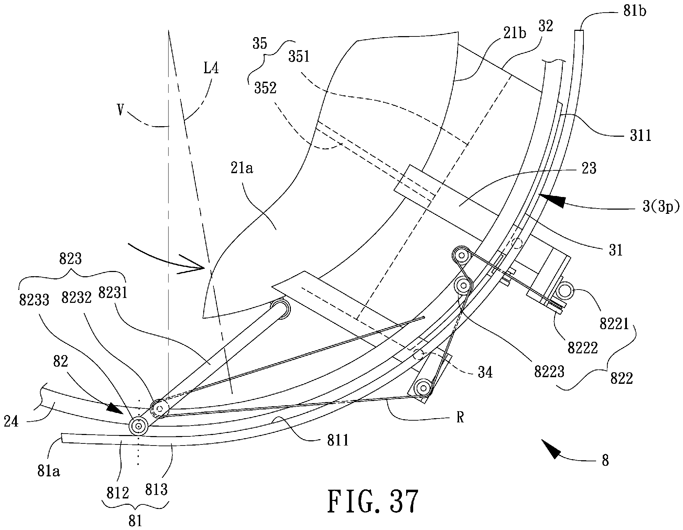

Referring to FIG. 37, as the rotor body 21 continues to rotate, the float 3 can remain in a state having a maximal extension magnitude (the float completely exposed stroke) when the rolling member 8233 moves from the movement control section 812 to the maintaining section 813. At this time, the rocking arm 8231 stops pivoting, and pulling of the connecting rope **R** is stopped. The float 3 can remain in the state having the maximal extension magnitude without the telescopic movement.

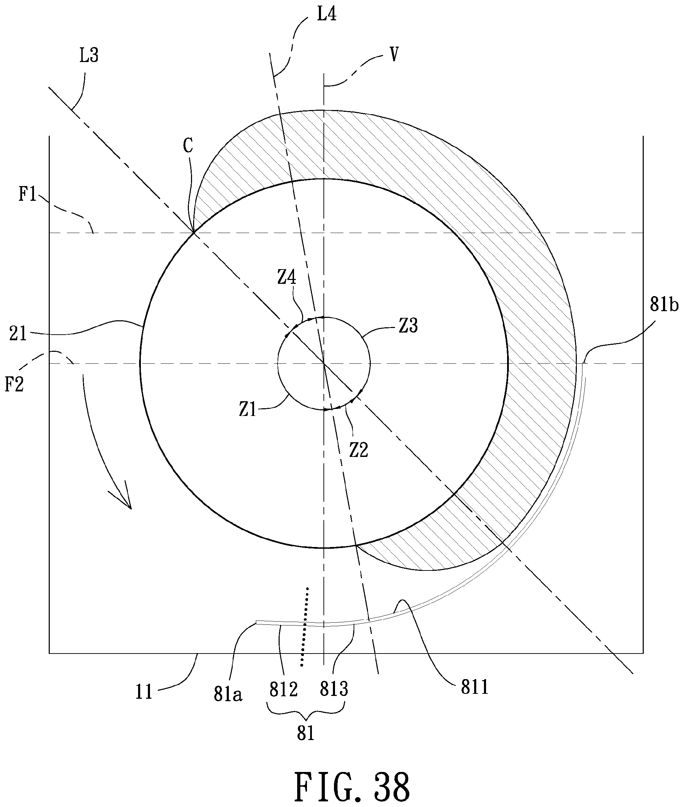

FIG 38 is a schematic diagram illustrating the extension magnitude of the float 3 when the rotor 2 according to a seventh embodiment of present invention rotates in a counterclockwise direction. The hatching area in FIG. 38 indicates the extension magnitude of the float 3 in the tank 11.

Since the telescopic movement start line L4 is used as the vertical line **V** (or the telescopic movement start line L4 is at an angle of less than 10° to the vertical line **V**) in this embodiment, it can be ensured that the float gradual extending section Z2 is located between the vertical line **V** and the horizontal line, with the vertical line **V** passing through the rotating center of the rotor body 21. This ensures that the float 3 extends out of the interior of the rotor body 21 only after passing through the vertical line **V.** Thus, the buoyancy energy generated by the float 3 can assist the rotation of the rotor 2, providing smooth rotation of the rotor 2.

Furthermore, at the upper portion of the rotor body 21, the telescopic movement end line L3 passes through a location (point **C** in FIG. 38) which defines a maximal level F1. The horizontal line passing through the rotating center of the rotor body 21 defines a minimal level F2. If the liquid in the tank 11 exceeds the maximal level F1, the float 3 cannot fully retract into the interior of the rotor body 21 before the float 3 sinks into the liquid. As a disadvantage, the float 3 encounters a larger resistance when sinking into the liquid, lowering the smoothness in the rotation of the rotor 2. Likewise, if the liquid in the tank 11 is lower than the minimal level F2, the period of time for which the float 3 undergoes the float completely exposed stroke will be too short. Therefore, there is insufficient power to assist in the rotation of the rotor 2, which also lowers the smoothness in the rotation of the rotor 2. Thus, the liquid level in the tank 11 is preferably between the maximal level F1 and the minimal level F2.

Note that when the guiding tracks 71 and 81 in the sixth and seventh embodiments are designed in a circular form, the guiding tracks 71 and 81 can also guide the floats 3 to move telescopically as it is the case of the first embodiment. Therefore, there can be only one float 3. Synchronous movement mechanism is not required between the floats 3. In addition, the float hidden stroke, the float gradual extending stroke, the float completely exposed stroke, and the float gradual retracting stroke can be controlled by the guiding tracks 71 and 81, so that the float hidden section Z1, the float gradual extending section Z2, the float completely exposed section Z3, and the float gradual retracting section Z4 may have different ranges. In other words, the float hidden section Z1 does not necessarily have to be opposing to the float completely exposed section Z3 in a diametric direction of the rotor body 21, and the float gradual extending section Z2 does not necessarily have to be opposing to the float gradual retracting section Z4 in a diametric direction of the rotor body 21.

Besides, the buoyancy-driven kinetic energy generating apparatus according to the present invention may further include a speed regulator (such as a constant speed motor) connected to the shaft portion 22 of the rotor 2. The speed regulator maintains the rotor body 21 of the rotor 2 in a constant rotating speed, such that the buoyancy-driven kinetic energy generating apparatus can stably generate the kinetic energy. In a case where the tank 11 is filled with a sufficient amount of liquid and the rotor body 21 keeps rotating under imbalance, the speed regulator consumes less energy. The energy of the speed regulator can be provided by a generator connected to the shaft portion 22. In addition, the speed regulator consumes more energy to assist the rotor body 21 in achieving or restoring an expected rotating speed only when the rotation of the rotor body 21 is not yet stable or when the buoyancy-driven kinetic energy generating apparatus is suddenly added with an extra load during the generation of the kinetic energy. Therefore, the speed regulator can further include a switching unit, such that the speed regulator can be switched to mains electricity or other power supply to obtain the required power when a larger amount of energy consumption takes place.

In view of the foregoing, in the buoyancy-driven kinetic energy generating apparatus according to the present invention, a rotor body 21 containing a mass is received in a tank 11 containing a liquid having a density larger than that of the mass (or a rotor body 21 having a density smaller than that of the liquid is received in the tank 11), such that a great pre-buoyancy is exerted to the rotor body 21 due to the density difference and the gravitational force, greatly increasing the total buoyancy. Furthermore, local buoyancy on the rotor body 21 is changed by controlling the float 3 to telescope relative to the rotor body 21, causing imbalance of the rotor body 21 and, hence, causing rotation of the rotor body 21. Thus, the input kinetic energy required to maintain the rotation of the rotor body 21 can effectively be reduced, effectively reducing the costs for generating kinetic energy. Furthermore, by cooperation of the inertia generated by the rotor body 21 of a large volume and the arcuate telescopic path of the float 3 rotating jointly with the rotor body 21, the rotational resistance of the rotor body 21 is reduced, such that the buoyancy-driven kinetic energy generating apparatus can operate smoothly to stably and continuously generate kinetic energy, enhancing the kinetic energy generating efficiency.

The buoyancy-driven kinetic energy generating apparatus according to the present invention has a simple structure, such that the costs of manufacturing, assembly and maintenance can be reduced.

## Claims

1. A buoyancy-driven kinetic energy generating apparatus, **characterized in** comprising:
a base including a tank;
a rotor including a rotor body and a shaft portion, with the shaft portion coupled to the rotor body and the tank, with the rotor body rotatably received in the tank about a rotating axis defined by the shaft portion;
at least one float telescopically mounted to the rotor body; and
a telescopic movement control module mounted in the tank, with the telescopic movement control module controlling the at least one float to telescope relative to the rotor body while the rotor body rotates.

2. The buoyancy-driven kinetic energy generating apparatus as claimed in claim 1, **characterized in that** the tank is adapted to receive a liquid, with the rotor body having an interior, and with the interior of the rotor body being hollow and adapted to receive a mass having a density smaller than a density of the liquid to create buoyancy to float the rotor body on the liquid in the tank.

3. The buoyancy-driven kinetic energy generating apparatus as claimed in claim 1, **characterized in that** the tank is adapted to receive a liquid, with the rotor body having a density smaller than a density of the liquid to create buoyancy to float the rotor body on the liquid in the tank.

4. The buoyancy-driven kinetic energy generating apparatus as claimed in claim 1, **characterized in that** the shaft portion of the rotor is connected to a speed regulator.

5. The buoyancy-driven kinetic energy generating apparatus as claimed in claim 1, **characterized in that** the at least one float is telescopically mounted to an outer surface of the rotor body.

6. The buoyancy-driven kinetic energy generating apparatus as claimed in claim 5, **characterized in that** the outer surface of the rotor body includes first and second end faces and a peripheral face connected between the first and second end faces, with the first and second end faces opposing to each other, and with the at least one float telescopically mounted to the peripheral face of the rotor body and telescopically moving in a radial direction relative to the rotor body.

7. The buoyancy-driven kinetic energy generating apparatus as claimed in claim 6, **characterized in that** the base includes two shaft fixing portions, with the two shaft fixing portions respectively mounted to two opposite outer sides of the tank respectively of two lateral walls of the tank and coaxial to each other, with the shaft portion of the rotor body including two shafts, with each of the two shafts including a shaft hole, with each of the two shafts including an end mounted to a respective one of the first and second end faces of the rotor body, as well as another end extending through the tank and connected to a respective one of the two shaft fixing portions, and with the shaft holes of the two shafts intercommunicating an interior of the rotor body with an outside of the tank.

8. The buoyancy-driven kinetic energy generating apparatus as claimed in claim 6, **characterized in that** the at least one float includes a first float, with the peripheral face of the rotor body including a first slot, with the first float including a housing and an isolating member, with the housing having an open end and received in the first slot, with the open end facing the interior of the rotor body, with the isolating member connecting the housing of the first float to the rotor body, and with the isolating member sealing the first slot.

9. The buoyancy-driven kinetic energy generating apparatus as claimed in claim 8, **characterized in that** the at least one float further includes a second float opposite to the first float in a diametric direction of the rotor body, with the peripheral face of the rotor body further including a second slot, with the second float including a housing, with the housing of the second float having an open end and received in the second slot, with the open end of the housing of the second float facing the interior of the rotor body, with the second float further including an isolating member connecting the housing of the second float to the rotor body, and with the isolating member of the second float sealing the second slot.

10. The buoyancy-driven kinetic energy generating apparatus as claimed in claim 9, **characterized in that** a connecting module is connected between the first and second floats, with the connecting module including two fixing members respectively fixed to inner walls of the housings of the first and second floats, and with the connecting module further including a connecting rod having two ends respectively fixed to the two fixing members.

11. The buoyancy-driven kinetic energy generating apparatus as claimed in claim 9, **characterized in that** the peripheral face of the rotor body further includes a third slot and a fourth slot, with the at least one float further including a third float and a fourth float opposed to the third float in a diametric direction of the rotor body, with each of the third and fourth floats located between the first and second floats, with the third float including a housing, with the housing of the third float having an open end and received in the third slot, with the open end of the housing of the third float facing the interior of the rotor body, with the third float further including an isolating member connecting the housing of the third float to the rotor body, with the isolating member of the third float sealing the third slot, with the fourth float including a housing, with the housing of the fourth float having an open end and received in the fourth slot, with the open end of the housing of the fourth float facing the interior of the rotor body, with the fourth float further including an isolating member connecting the housing of the fourth float to the rotor body, and with the isolating member of the fourth float sealing the fourth slot.

12. The buoyancy-driven kinetic energy generating apparatus as claimed in claim 11, **characterized in that** a connecting module is connected between the third and fourth floats, with the connecting module including two fixing members respectively fixed to inner walls of the housings of the third and fourth floats, and with the connecting module further including a connecting rod having two ends respectively fixed to the two fixing members.

13. The buoyancy-driven kinetic energy generating apparatus as claimed in any one of claims 8, 9, 10, 11 and 12, **characterized in that** the housing includes a liquid breaking portion in a front end of the housing in a rotating direction of the rotor, with the liquid breaking portion having an protruding edge, with the protruding edge having two side faces meeting each other at a center of the protruding edge and respectively connecting to two lateral edges of the housing.

14. The buoyancy-driven kinetic energy generating apparatus as claimed in any one of claims 8, 9, 10, 11 and 12, **characterized in that** the isolating member is made of an elastic leakproof material, with an end of the isolating member fixed to the peripheral face of the rotor body, and with another end of the isolating member fixed to an outer face of the housing.

15. The buoyancy-driven kinetic energy generating apparatus as claimed in any one of claims 8, 9, 10, 11 and 12, **characterized in that** the outer surface of the housing is arcuate and has a curvature corresponding to a curvature of the peripheral face of the rotor body, and with the outer surface of the housing and the peripheral face of the rotor body forming a continuous arcuate face when the housing retracts into the interior of the rotor body in a maximal extension magnitude.

16. The buoyancy-driven kinetic energy generating apparatus as claimed in claim 6, **characterized in that** the telescopic movement control module includes a guiding track and at least one slidewheel unit, with the at least one slidewheel unit having a same quantity as the at least one float, with each of the at least one slidewheel unit mounted to the rotor body and connected to a respective one of the at least one float, with the guiding track mounted in the tank and guiding the at least one slidewheel unit to move, thereby controlling the telescopic movement of the respective one of the at least one float.

17. The buoyancy-driven kinetic energy generating apparatus as claimed in claim 16, **characterized in that** the guiding track includes an abutment face facing the peripheral face of the rotor body.

18. The buoyancy-driven kinetic energy generating apparatus as claimed in claim 17, **characterized in that** the guiding track includes a movement control section and a maintaining section arranged in sequence in a rotating direction of the rotor, with the movement control section and the maintaining section connected to each other, and with a spacing between the movement control section and a rotating center of the rotor decreasing from a point of the movement control section toward the maintaining section.

19. The buoyancy-driven kinetic energy generating apparatus as claimed in claim 18, **characterized in that** the abutment face and the peripheral face of the rotor body are concentric in the maintaining section.

20. The buoyancy-driven kinetic energy generating apparatus as claimed in claim 18, **characterized in that** a telescopic movement end line is at an angle of 45° to a horizontal line, with the telescopic movement end line passing through a rotating center of the rotor body and the maintaining section of the guiding track, with the telescopic movement end line passing through a location at an upper portion of the rotor body, with the location defining a maximal level, with the horizontal line passing through the rotating center of the rotor body and defining a minimal level, and with a level of the liquid being between the maximal level and the minimal level.

21. The buoyancy-driven kinetic energy generating apparatus as claimed in claim 16, **characterized in that** the peripheral face of the rotor body includes at least one slot having a same quantity as the at least one float, with each of the at least one float including a housing, with the housing having an open end and received in a respective one of the at least one slot, with the open end of the float facing an interior of the rotor body, with each of the at least one float further including an isolating member connecting the housing of the float to the rotor body, with the isolating member of the float sealing the respective one of the at least one slot, with each of the at least one slidewheel unit including a first slidewheel unit, a positioning unit and a pivoting unit, with the first slidewheel unit mounted to an outer surface of the housing of the respective one of the at least one float, with the positioning unit connected to the rotor body and including a second slidewheel unit, with the pivoting unit connected to the rotor body, with a connecting rope wound around the first and second slidewheel units and connected to the pivoting unit, with the pivoting unit starting to pivot when making contact with the guiding track, and with the pivoting unit pulling the connecting rope to control the telescopic movement of the respective one of the at least one float.

22. The buoyancy-driven kinetic energy generating apparatus as claimed in claim 21, **characterized in that** the rotor further includes a plurality of outer tracks respectively mounted to the first and second end faces of the rotor body, with the outer surface of the housing of the float having two sides provided with a plurality of limiting members, and with each of the plurality of limiting members movably mounted in a corresponding one of the plurality of outer tracks.

23. The buoyancy-driven kinetic energy generating apparatus as claimed in claim 22, **characterized in that** the positioning unit includes a positioning support having two ends respectively fixed to two adjacent ones of the plurality of outer tracks, with the positioning support stretching over the peripheral face of the rotor body.

24. The buoyancy-driven kinetic energy generating apparatus as claimed in claim 22, **characterized in that** the positioning support is connected to free ends of the two adjacent ones of the plurality of outer tracks.

25. The buoyancy-driven kinetic energy generating apparatus as claimed in claim 22, **characterized in that** the second slidewheel unit is mounted to the positioning support and diametrically opposing to the first slidewheel unit.

26. The buoyancy-driven kinetic energy generating apparatus as claimed in claim 22, **characterized in that** the plurality of outer tracks includes a plurality of first outer tracks connected to the first end face of the rotor body, as well as a plurality of second outer tracks connected to the second end face of the rotor body, with the plurality of first outer tracks connected by a ring, and with the plurality of second outer tracks connected by another ring.

27. The buoyancy-driven kinetic energy generating apparatus as claimed in claim 21, **characterized in that** the positioning unit further includes a third slidewheel unit, with the connecting rope that passes through the second slidewheel unit connected to the third slidewheel unit and diverted to a lateral side of the respective one of the at least one float by the third slidewheel unit.

28. The buoyancy-driven kinetic energy generating apparatus as claimed in claim 27, **characterized in that** the pivoting unit includes a rocking arm and a fourth slidewheel unit, with the rocking arm pivotally connected to the peripheral face of the rotor body, with the fourth slidewheel unit mounted to the rocking arm, with the connecting rope wound around and passing through the first slidewheel unit, the second slidewheel unit, the third slidewheel unit and the fourth slidewheel unit in sequence, and with the connecting rope fixed to the rotor.

29. The buoyancy-driven kinetic energy generating apparatus as claimed in claim 28, **characterized in that** the pivoting unit further includes a rolling member rotatably mounted to a free end of the rocking arm, with the rolling member moving along the guiding track.

30. The buoyancy-driven kinetic energy generating apparatus as claimed in claim 21, **characterized in that** the pivoting unit includes a pivoting frame, a rocking arm and a rolling member, with the pivoting frame pivotally connected to the peripheral face of the rotor body, with the connecting rope wound around and passing through the first slidewheel unit and the second slidewheel unit in sequence, with the connecting rope fixed to the pivoting frame, with the rocking arm fixed to the pivoting frame, with the rolling member rotatably mounted to a free end of the rocking arm and moving along the guiding track.

31. A method for generating kinetic energy using the buoyancy-driven kinetic energy generating apparatus as claimed in claim 1, with the method **characterized in** comprising:
filling a liquid into the tank to provide the rotor body with a pre-buoyancy; and
controlling the at least one float to telescope relative to the rotor body, causing a change in local buoyancy of the rotor body to imbalance the rotor body and to cause rotation of the rotor body about the rotating axis,
with each of the at least one float completing a telescopic cycle while the float rotates a turn together with the rotor body about the rotating axis, with the telescopic cycle including a float hidden stroke, a float gradual extending stroke, a float completely exposed stroke and a float gradual retracting stroke in sequence, with the tank including a float hidden section, a float gradual extending section, a float completely exposed section and a float gradual retracting section in sequence in a rotating direction of the rotor,
with the float hidden section corresponding to the float hidden stroke, wherein each of the at least one float maintains in a maximal retraction state having a maximal retraction magnitude when located in the float hidden section,
wherein when each of the at least one float is driven by the rotating rotor body to move from the float hidden section into the float gradual extending section, the float undergoes the float gradual extending stroke, and the extension magnitude of the float increases gradually until the float enters the float completely exposed section where the extension magnitude of the float is maximal,
with the float completely exposed section corresponding to the float completely exposed stroke, wherein each of the at least one float undergoes the float completely exposed stroke in the float completely exposed section and maintains a maximal extension magnitude to drive the rotor body to rotate,
wherein each of the at least one float is driven by the rotating rotor body to move from the float completely exposed section into the float gradual retracting section, wherein when the float undergoes the float gradual retracting stroke, the extension magnitude of the float decreases gradually in the float gradual retracting section until the float enters the float hidden section and then undergoes the float hidden stroke in the maximal retraction state.

32. The method as claimed in claim 31, **characterized in that** the float gradual extending section is located below a level of the liquid, and the float gradual retracting section is located above the level of the liquid.

33. The method as claimed in claim 31, **characterized in that** the float gradual extending section is located between a vertical line and a horizontal line, with each of the vertical and horizontal lines passing through the rotating center of the rotor body.

34. The method as claimed in claim 31, **characterized in that** the float hidden section is opposite to the float completely exposed section in a diametric direction of the rotor body, and the float gradual extending section is opposite to the float gradual retracting section in a diametric direction of the rotor body.

35. The method as claimed in claim 34, **characterized in that** the float hidden section, the float gradual extending section, the float completely exposed section and the float gradual retracting section extend through a same angle.

36. The method as claimed in claim 31, **characterized in that** the at least one float includes a first float and a second float opposed to the first float in a diametric direction of the rotor body, with one of the first and second floats undergoing the float hidden stroke while another of the first and second floats undergoes the float completely exposed stroke, with one of the first and second floats undergoing the float gradual extending stroke while the other of the first and second floats undergoes the float gradual retracting stroke.

37. The method as claimed in claim 31, **characterized in that** the extension magnitude of the at least one float forms an arcuate path during the float gradual extending stroke, the float completely exposed stroke and the float gradual retracting stroke.

38. The method as claimed in claim 37, **characterized in that** the extension magnitude of the at least one float forms an arcuate path having increasing radiuses of curvature along with rotational movement of the rotor body about the rotating axis during the float gradual extending stroke, wherein the extension magnitude of the at least one float forms an arcuate path having a uniform radius of curvature along with the rotational movement of the rotor body during the float completely exposed stroke, and wherein the extension magnitude of the at least one float forms an arcuate path having decreasing radiuses of curvature along with the rotational movement of the rotor body during the float gradual retracting stroke.
